(19) Europäisches Patentamt
European Patent Office
Office européen des brevets

(11) **EP 3 501 945 A1**

(12) **EUROPEAN PATENT APPLICATION**
published in accordance with Art. 153(4) EPC

(43) Date of publication:
**26.06.2019 Bulletin 2019/26**

(51) Int Cl.:
**B62D 6/00** *(2006.01)*     **B62D 5/04** *(2006.01)*

(21) Application number: **18841888.3**

(22) Date of filing: **31.07.2018**

(86) International application number:
**PCT/JP2018/028615**

(87) International publication number:
**WO 2019/026895 (07.02.2019 Gazette 2019/06)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **02.08.2017   JP 2017150031**
**10.10.2017   JP 2017196894**
**28.02.2018   JP 2018034285**

(71) Applicant: **NSK Ltd.**
**Tokyo 141-8560 (JP)**

(72) Inventor: **TSUBAKI, Takahiro**
**Maebashi-Shi**
**Gunma 371-8527 (JP)**

(74) Representative: **Schmitt-Nilson Schraud Waibel Wohlfrom**
**Patentanwälte Partnerschaft mbB**
**Pelkovenstraße 143**
**80992 München (DE)**

(54) **ELECTRIC POWER STEERING APPARATUS**

(57)     [Problem]

An object of the present invention is to provide an electric power steering apparatus that achieves smooth manual steering even if steering intervention is performed by a driver during automatic steering, ensures more safety when a driver steers urgently, and enables both assist control and steering angle control.

[Means for solving the problem]

The electric power steering apparatus comprises a steering angle control section that calculates a steering angle control current command value for the steering angle control; wherein the steering angle control section comprises a position control section that calculates a basic steering angular velocity command value, a steering intervention compensating section that obtains a compensatory steering angular velocity command value, and a steering angular velocity control section that calculates the steering angle control current command value from the basic steering angular velocity command value, the compensatory steering angular velocity command value and an actual steering angular velocity; and wherein the steering intervention compensating section comprises a basic map section that obtains a first velocity command value using a basic map, and a hysteresis correcting section that obtains a second velocity command value using a hysteresis characteristic, calculates the compensatory steering angular velocity command value from the first and second velocity command values, and calculates the current command value using at least the steering angle control current command value.

FIG. 7

## Description

Technical Field

The present invention relates to an electric power steering apparatus that enables an automatic steering by performing an assist control and a steering angle control for a steering system by driving and controlling a motor based on a current command value, and in particular to an electric power steering apparatus that enables safety and reduction of uncomfortable feeling even if a steering intervention is performed by a driver during the automatic steering.

Background Art

An electric power steering apparatus (EPS) which provides a steering system of a vehicle with a steering assist torque (an assist torque) by means of a rotational torque of a motor, applies a driving force of the motor as the steering assist torque to a steering shaft or a rack shaft by means of a transmission mechanism such as gears or a belt through a reduction mechanism, and performs an assist control. In order to accurately generate the assist torque, such a conventional electric power steering apparatus performs a feed-back control of a motor current. The feed-back control adjusts a voltage supplied to the motor so that a difference between a steering assist command value (a current command value) and a detected motor current value becomes small, and the adjustment of the voltage supplied to the motor is generally performed by an adjustment of a duty ratio of a pulse width modulation (PWM) control.

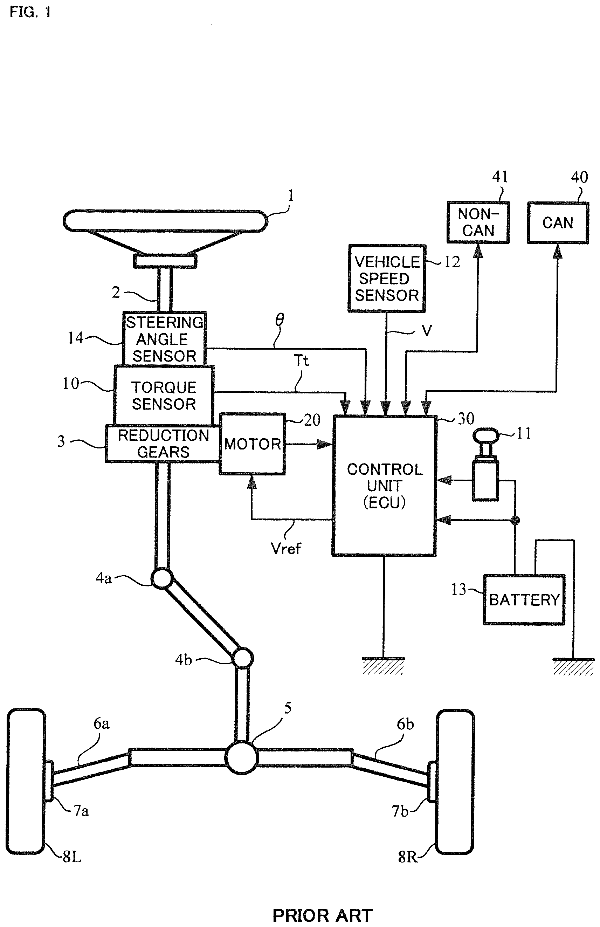

A general configuration of the conventional electric power steering apparatus will be described with reference to FIG.1. As shown in FIG.1, a column shaft (a steering shaft or a handle shaft) 2 connected to a handle (a steering wheel) 1 is connected to steered wheels 8L and 8R through reduction gears (worm gears) 3 constituting the reduction mechanism, universal joints 4a and 4b, a rack-and-pinion mechanism 5, and tie rods 6a and 6b, further via hub units 7a and 7b. In addition, a torsion bar is inserted into the column shaft 2, for which a steering angle sensor 14 for detecting a steering angle θ of the handle 1 by means of a twist angle of the torsion bar and a torque sensor 10 for detecting a steering torque Tt are provided, and a motor 20 for assisting a steering force of the handle 1 is connected to the column shaft 2 through the reduction gears 3. The electric power is supplied to a control unit (ECU) 30 for controlling the electric power steering apparatus from a battery 13, and an ignition key signal is inputted into the control unit 30 through an ignition key 11. The control unit 30 calculates a current command value of an assist control command on the basis of the steering torque Tt detected by the torque sensor 10 and a vehicle speed V detected by a vehicle speed sensor 12, and controls a current supplied to the motor 20 by means of a voltage control command value Vref obtained by performing a compensation or the like to the current command value.

As well, the steering angle sensor 14 is not essential, it does not need to be provided, and it is possible to obtain the steering angle from a rotational angle sensor such as a resolver connected to the motor 20.

A controller area network (CAN) 40 exchanging various information of the vehicle is connected to the control unit 30, and it is possible to receive the vehicle speed V from the CAN 40. Further, it is also possible to connect a non-CAN 41 exchanging a communication, analog/digital signals, a radio wave or the like except with the CAN 40 to the control unit 30.

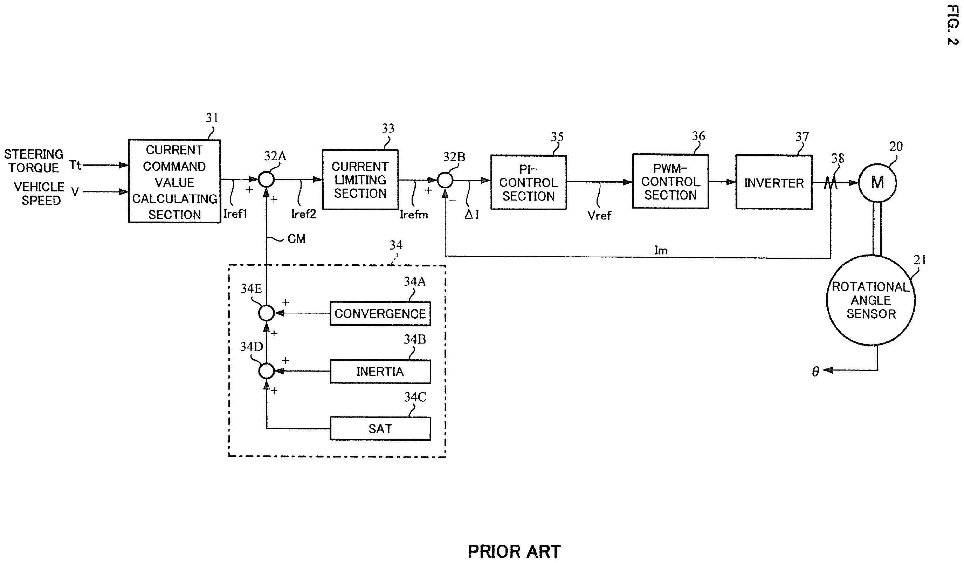

The control unit 30 mainly comprises a central processing unit (CPU) (including a micro processor unit (MPU), a micro controller unit (MCU) and so on), and general functions performed by programs within the CPU are shown in FIG.2.

The control unit 30 will be described with reference to FIG.2. As shown in FIG.2, the steering torque Tt detected by the torque sensor 10 and the vehicle speed V detected by the vehicle speed sensor 12 (or from the CAN 40) are inputted into a current command value calculating section 31 that calculates a current command value Iref1. The current command value calculating section 31 calculates the current command value Iref1 that is a control target value of a current supplied to the motor 20 on the basis of the inputted steering torque Tt and vehicle speed V and by using an assist map or the like. The current command value Iref1 is inputted into a current limiting section 33 through an adding section 32A. A current command value Irefm the maximum current of which is limited is inputted into a subtracting section 32B, and a current deviation $\Delta I$ (= Irefm - Im) between the current command value Irefm and a motor current Im being fed back is calculated. The current deviation $\Delta I$ is inputted into a proportional integral (PI) control section 35 for improving a characteristic of the steering operation. The voltage control command value Vref whose characteristic is improved by the PI-control section 35 is inputted into a PWM-control section 36. Furthermore, the motor 20 is PWM-driven through an inverter 37. The motor current Im of the motor 20 is detected by a motor current detector 38 and is fed back to the subtracting section 32B. The inverter 37 is comprised of a bridge circuit of field effect transistors (FETs) as semiconductor switching elements.

A rotational angle sensor 21 such as a resolver is connected to the motor 20, and a rotational angle θ is detected and outputted by the rotational angle sensor 21.

Further, a compensation signal CM from a compensation signal generating section 34 is added to the adding section 32A, and a characteristic compensation of the steering system is performed by the addition of the compensation signal CM so as to improve a convergence, an inertia characteristic and so on. The compensation signal generating section 34 adds a self-aligning torque (SAT) 34C and an inertia 34B at an adding section 34D, further adds the result of addition performed at the adding section 34D with a convergence 34A at an adding section 34E, and then outputs the result of addition performed at the adding section 34E as the compensation signal CM.

Research and development of automatic driving technique of a vehicle has been recently advanced, and proposals where an electric power steering apparatus (EPS) is applied to automatic steering included in the technique, have been made. In the case of achieving automatic steering by the EPS, the EPS has a mechanism for assist control performed by a conventional EPS and a mechanism for steering angle control of controlling a steering system so that a vehicle drives in a desired direction independently, and is generally configured so as to make outputs of these mechanisms possible to adjust. In the steering angle control, position and velocity control having superior performance of responsiveness to a steering angle command being a control target of a steering angle and a disturbance suppression characteristic to a road surface reaction force and so on, is used, for example, a proportional (P) control is adopted in position control, and a proportional integral (PI) control is adopted in velocity control.

In the case of performing the assist control and the steering angle control independently and performing the whole control by switching command values being outputs of both controls, switching them by a switch or the like suddenly may cause the uncomfortable feeling to the driver because the command value is suddenly changed and behavior of the handle becomes unnatural. In order to deal with this problem, in the case of switching between a torque control method (corresponding to the assist control) and a rotational angle control method (corresponding to the steering angle control), an apparatus disclosed in Japanese Unexamined Patent Publication No.2004-17881 A (Patent Document 1) sets a value obtained by multiplying respective command values of both methods with coefficients (an automatic coefficient and a manual coefficient) and adding the multiplied results on a final command value, gradually changes these coefficients, and suppresses an abrupt change of the command value. The apparatus uses a P-control in the position control of the rotational angle control method, and uses the PI-control in the velocity control.

In the publication of Japanese Patent No.3917008 B2 (Patent Document 2), an automatic steering control apparatus is proposed that automatically performs a handle operation depending on a set steering angle and aims at parking assist in particular. This apparatus can switch between a torque control mode (corresponding to the assist control) and a parking assist mode (corresponding to the steering angle control), and performs the control by using prestored parking data in the parking assist mode. Further, the apparatus performs a P-control in position control of the parking assist mode, and performs the PI-control in the velocity control.

The publication of Japanese Patent No.3912279 B2 (Patent Document 3) does not directly apply the EPS, however, when the apparatus disclosed in Patent Document 3 starts the steering angle control by switching a mode to the automatic steering mode, the apparatus reduces the uncomfortable feeling to the driver caused by an abrupt change of the handle at the start by gradually increasing the steering velocity (the steering angular velocity).

The List of Prior Art Documents

Patent Documents

Patent Document 1: Japanese Unexamined Patent Publication No.2004-17881 A
Patent Document 2: Japanese Patent No.3917008 B2
Patent Document 3: Japanese Patent No.3912279 B2

Summary of the Invention

Problems to be Solved by the Invention

However, in Patent Document 1, since the command value (the steering angle control command value) for the steering angle control is limited by the coefficient and is outputted to the final command value while the method is switched, the final command value decreases by the limited amount. Because the actual velocity of the motor becomes slow since this limitation compared with the command value (the steering angular velocity command value) for the steering angular velocity calculated by the steering angle control command value, the deviation occurs between the steering angular velocity command value and the actual velocity, the integral value of the integral (I) control in the velocity control accumulates, and a larger steering angle control command value is outputted from the velocity control. As a result, since the limitation by the coefficient is lessened in the state where the coefficient by which a command value (an assist control command value) for the assist control is multiplied gradually increases, the steering angle control command value becomes an excessive value as the coefficient increases, the handle reacts to the steering angular velocity command value excessively, and it may cause the uncomfortable feeling such as catching feeling and unpleasantness to the driver.

Further, the apparatus disclosed in Patent Document 1 uses the P-control in the position control and the PI-control in the velocity control. When the manual input of the driver intervenes in the steering angle control, the steering angle control operates so as to follow the steering angle control command value, and it is difficult to steer by hand until the switching from the steering angle control to the assist control is performed. Furthermore, a time delay occurs by detecting the manual input and switching, and the operation for the steering intervention by the driver may not be performed sufficiently.

The apparatus disclosed in Patent Document 2 also performs the steering angle control by using the P-control in the position control and the PI-control in the velocity control. In the case of performing the steering angle control in the vehicle, a disturbance and a load state are significantly changed due to the vehicle speed, the friction, the change of the road surface reaction force and so on, so that the apparatus must have a control configuration being resistant to them. However, in the control configuration of the apparatus described in Patent Document 2 alone, for example, in the case that the road surface reaction force changes, or in the case that a target steering angle changes rapidly, the vibration occurs due to a natural vibration caused by a mass damper of the steering wheel and a spring of the torsion bar, and the driver may feel it as the uncomfortable feeling or the unpleasantness.

The apparatus disclosed in Patent Document 3 gradually increases the steering angular velocity at the start of the steering angle control, and since the steering angular velocity continues increasing until an upper limit after beginning to increase, an integral value of the I-control accumulates excessively. As a result, the steering angle control command value becomes an excessive value, the handle reacts to the steering angular velocity command value excessively, and it may cause the uncomfortable feeling to the driver.

Accordingly, the present invention has been developed in view of the above-described circumstances, and an object of the present invention is to provide the electric power steering apparatus that achieves the smooth manual steering even if the steering intervention is performed by the driver during the automatic steering, ensures more safety when the driver steers urgently, and enables the both assist control and steering angle control.

Means for Solving the Problems

The present invention relates to an electric power steering apparatus that drives a motor based on a current command value and performs an assist control and a steering angle control to a steering system by driving and controlling the motor, the above-described object of the present invention is achieved by that: comprising a steering angle control section that calculates a steering angle control current command value for the steering angle control based on at least a steering angle command value and an actual steering angle, wherein the steering angle control section comprises a position control section that calculates a basic steering angular velocity command value based on the steering angle command value and the actual steering angle, a steering intervention compensating section that obtains a compensatory steering angular velocity command value for steering intervention compensation depending on a steering torque, the actual steering angle and a vehicle speed, and a steering angular velocity control section that calculates the steering angle control current command value based on a steering angular velocity command value calculated from the basic steering angular velocity command value and the compensatory steering angular velocity command value, and an actual steering angular velocity, and wherein the steering intervention compensating section comprises a basic map section that obtains a first velocity command value from the steering torque using a basic map which is vehicle speed-sensitive, and a hysteresis correcting section that obtains a second velocity command value from the actual steering angle using a desired hysteresis characteristic, wherein the steering intervention compensating section calculates the compensatory steering angular velocity command value from the first velocity command value and the second velocity command value, and calculates the current command value using at least the steering angle control current command value.

The above-described object of the present invention is efficiently achieved by that: wherein a hysteresis width of the hysteresis characteristic changes depending on the vehicle speed; or wherein the basic map has a characteristic that the first velocity command value increases as the steering torque increases; or wherein the basic map has a characteristic that the first velocity command value decreases as the vehicle speed increases; or wherein the steering intervention compensating section further comprises a velocity command value phase-compensating section that is disposed at a previous stage or a subsequent stage of the basic map section and performs a phase compensation, and wherein the steering intervention compensating section obtains the first velocity command value from the steering torque through the basic map section and the velocity command value phase-compensating section; or wherein the steering angular velocity control section calculates the steering angle control current command value by an integral-proportional control (an I-P control) by using the steering angular velocity command value and the actual steering angular velocity; or wherein the position control section comprises a proportional gain section that calculates the basic steering angular velocity command value by multiplying a deviation between the steering angle command value and the actual steering angle with a proportional gain; or wherein the position control section comprises a reference model section that transforms the steering angle command value into a target steering angle using a reference model, a proportional gain section that calculates a first basic steering angular velocity command value by multiplying a deviation between the target steering angle and the actual steering angle with a proportional gain, and a filter section that transforms the steering angle command value into a second basic steering angular velocity command value using a feed-forward filter (an FF filter), and wherein the position control section calculates the basic steering angular velocity command value by adding the second basic steering angular velocity command value to the first basic steering angular velocity command value; or wherein the electric power steering apparatus further comprises an assist control section that calculates an assist control current command value for the assist control based on at least the steering torque, and the electric power steering apparatus calculates the current command value using the assist control current command value and the steering angle control current command value; or wherein the assist control current command value is multiplied with an assist control-output gradual-change gain for adjusting the assist control current command value; or wherein an assist map output current obtained in the assist control section is multiplied with an assist map gradual-change gain; or wherein only the steering angle control is performed to the steering system by multiplying the assist control current command value with the assist control-output gradual-change gain whose value is zero; or wherein the steering angle control section further comprises a steering angle control current command-value limiting section that limits the steering angle control current command value by using a preset limit value.

The above-described object of the present invention is achieved by that: wherein the steering angle control section further comprises a filter section that converts a steering angular velocity command value calculated from the basic steering angular velocity command value and the compensatory steering angular velocity command value into an extended steering angular velocity command value using a feedforward filter, and wherein the steering angular velocity control section calculates the steering angle control current command value based on the extended steering angular velocity command value and an actual steering angular velocity.

Effects of the Invention

The electric power steering apparatus of the present invention smoothly enables the safety and the reduction of the uncomfortable feeling even if the steering intervention is performed during the automatic steering because it compensates the steering intervention by using the basic map and the hysteresis characteristic in the steering angle control.

Brief Description of the Drawings

In the accompanying drawings:

FIG.1 is a configuration diagram illustrating a general outline of an electric power steering apparatus;
FIG.2 is a block diagram showing a configuration example of a control unit (ECU) of the electric power steering apparatus;
FIG.3 is a block diagram showing a configuration example (the first embodiment) of a whole vehicle system relating to the present invention;
FIG.4 is a block diagram showing a configuration example (the first embodiment) of a switch judging and gradual-change gain generating section;
FIG.5 is a block diagram showing a configuration example (the first embodiment) of a manual input judging section;
FIGs.6A, 6B and 6C are graphs showing an example of changing gradual-change gains corresponding to a steering state;
FIG.7 is a block diagram showing a configuration example (the first embodiment) of a steering angle control section and a switching section;
FIG.8 is a characteristic diagram showing an example of a limit value in a steering angle command value variable-limiting section;
FIG.9 is a block diagram showing a configuration example of a position control section in the first embodiment;
FIG.10 is a characteristic diagram showing an example of changing a feed-forward filter gain (an FF filter gain) of the position control section to the vehicle speed;
FIG.11 is a block diagram showing a configuration example of a steering intervention compensating section;
FIGs.12A and 12B are characteristic diagrams showing an example of a basic map;
FIG.13 is a characteristic diagram showing an example of a hysteresis characteristic;
FIG.14 is a characteristic diagram showing an example of a vehicle speed-sensitive hysteresis width;
FIG.15 is a characteristic diagram showing an example of a damper gain map;
FIG.16 is a characteristic diagram showing an example of a steering angle sensitive-gain;
FIG.17 is a characteristic diagram showing an example (the first embodiment) of a limit value in a velocity command value variable-limiting section;
FIG.18 is a block diagram showing a configuration example (the first embodiment) of a steering angular velocity control section;
FIG.19 is a block diagram showing a configuration example of a handle damping section;
FIG.20 is a characteristic diagram showing an example of a limit value in a steering angle control current command-value limiting section;
FIG.21 is a flowchart showing an operating example of an EPS-side ECU;
FIG.22 is a flowchart showing an operating example (the first embodiment) of the switch judging and gradual-change gain generating section;
FIG.23 is a flowchart showing a part of an operating example (the first embodiment) of the steering angle control section;
FIG.24 is a flowchart showing a part of the operating example (the first embodiment) of the steering angle control section;

FIG.25 is a flowchart showing an operating example of the steering intervention compensating section;

FIG.26 is a block diagram showing an example of a steering model of a driver used in simulations;

FIG.27 is a graph showing an example of time responses of a target angle, an actual steering angle and a steering torque in a simulation with respect to steering intervention compensation;

FIG.28 is a graph showing an example of changing the actual steering angle and the steering torque in the simulation with respect to the steering intervention compensation;

FIG.29 is a graph showing an example of changing the target angle to the time in the simulation with respect to the hysteresis characteristic in the steering intervention compensation;

FIG.30 is a graph showing a simulation result with respect to the hysteresis characteristic in the steering intervention compensation;

FIG.31 is a graph showing a simulation result in the case that the driver releases a handle after performing the steering intervention compensation;

FIG.32 is a graph showing an example (the first embodiment) of changing a target steering angular velocity, gradual-change gains and a limit value in the case of transferring a steering state;

FIGs.33A and 33B are block diagrams showing arrangement examples of a velocity command value phase-compensating section;

FIG.34 is a block diagram showing a configuration example (the second embodiment) of the steering angular velocity control section;

FIG.35 is a block diagram showing a configuration example (the third embodiment) of the steering angular velocity control section;

FIG.36 is a graph showing an example (a fourth embodiment) of changing the target steering angular velocity, the gradual-change gains and the limit value in the case of transferring the steering state;

FIG.37 is a block diagram showing a configuration example (the fourth embodiment) of the steering angle control section and the switching section;

FIG.38 is a block diagram showing a configuration example of the position control section in the fourth embodiment;

FIG.39 is a flowchart showing a part of an operating example (the fourth embodiment) of the steering angle control section;

FIG.40 is a flowchart showing a part of the operating example (the fourth embodiment) of the steering angle control section; and

FIG.41 is a block diagram showing a configuration example (the fifth embodiment) of the steering angle control section and the switching section.

Mode for Carrying Out the Invention

An electric power steering apparatus (EPS) according to the present invention performs an assist control being a function of a conventional EPS and a steering angle control necessary to an automatic steering in an automatic driving. The assist control and the steering angle control are performed at an assist control section and a steering angle control section respectively, and the EPS calculates a current command value for driving and controlling a motor by using an assist control current command value and a steering angle control current command value outputted from respective sections. Both of the steering angle control and the assist control are performed in an automatic steering (an automatic steering state), and the assist control is performed in a manual steering (a manual steering state) when a driver takes part in a steering. In order to reduce uncomfortable feeling caused due to a steering intervention by the driver during the automatic steering, the EPS performs a steering-intervention compensation depending on a steering torque, an actual steering angle and a vehicle speed. Concretely, the EPS compensates a steering angular velocity command value by means of a compensation value (a compensatory steering angular velocity command value) calculated from the compensation value (the first velocity command value) obtained by using a basic map based on the steering torque and the vehicle speed, and the compensation value (the second velocity command value) obtained by using a hysteresis characteristic based on the actual steering angle.

Hereinafter, embodiments of the present invention will be described with reference to the accompanying drawings.

First, a whole vehicle system including the electric power steering apparatus according to the present invention will be described.

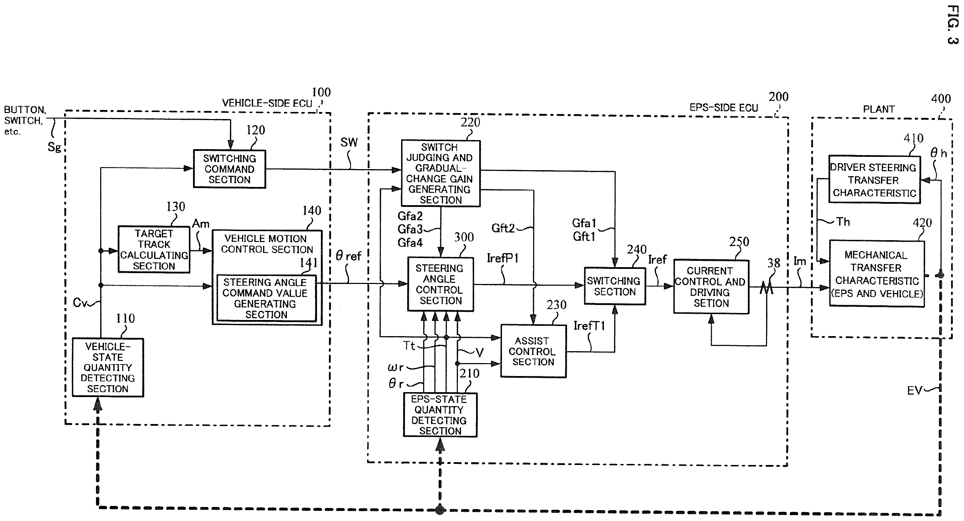

FIG.3 shows a configuration example (the first embodiment) of the whole vehicle system relating to the present invention, which comprises an ECU 100 (hereinafter referred to a "vehicle-side ECU") equipped for a vehicle, an ECU 200 (hereinafter referred to an "EPS-side ECU") equipped for the EPS, and a plant 400.

The vehicle-side ECU 100 comprises a vehicle-state quantity detecting section 110, a switch command section 120, a target track calculating section 130 and a vehicle motion control section 140.

The vehicle-state quantity detecting section 110 comprises an on-vehicle camera, a distance sensor, an angular velocity sensor, an acceleration sensor and so on, and outputs data detected by them as a vehicle-state quantity Cv to the switch command section 120, the target track calculating section 130 and the vehicle motion control section 140. The switch command section 120 inputs a signal Sg for switching an operation mode from a button, a switch or the like provided for a dashboard or the like with the vehicle-state quantity Cv, and outputs a switch signal SW to the EPS-side ECU 200. The operation mode has an "assist control mode" and a "steering angle control mode", the "assist control mode" is a mode corresponding to the manual steering, and the "steering angle control mode" is a mode corresponding to the automatic steering. The switch command section 120 determines the operation mode considering respective data included in the vehicle-state quantity Cv based on the signal Sg which shows an intention of the driver, and outputs the determined operation mode as the switch signal SW.

The target track calculating section 130 calculates a target track Am by an existing method based on the vehicle-state quantity Cv, and outputs it to the vehicle motion control section 140.

The vehicle motion control section 140 comprises a steering angle command value generating section 141. The steering angle command value generating section 141 generates a steering angle command value θref being a control target value of the steering angle based on the target track Am and the vehicle-state quantity Cv, and outputs it to the EPS-side ECU 200.

The EPS-side ECU 200 comprises an EPS-state quantity detecting section 210, a switch judging and gradual-change gain generating section 220, a steering angle control section 300, an assist control section 230, a switching section 240, a current control and driving section 250 and a motor current detector 38.

The EPS-state quantity detecting section 210 comprises an angle sensor, a torque sensor and a speed sensor, and detects an EPS-state quantity. Concretely, the angle sensor detects a handle angle (an angle at an upper side of a torsion bar) θh as an actual steering angle Or, the torque sensor detects a steering torque Tt, and the speed sensor detects a vehicle speed V. The EPS-state quantity detecting section 210 calculates an actual steering angular velocity ωr by performing a differential calculation to the actual steering angle θr. The actual steering angle θr and the actual steering angular velocity ωr are inputted into the steering angle control section 300, the steering torque Tt is inputted into the switch judging and gradual-change gain generating section 220, the steering angle control section 300 and the assist control section 230, and the vehicle speed V is inputted into the steering angle control section 300 and the assist control section 230.

As well, it is possible to use a column angle (an angle at a lower side of the torsion bar) as the actual steering angle θr, and also to use a rotational angle of the motor as the actual steering angle θr by comprising a motor angle sensor (a rotational angle sensor). Furthermore, the actual steering angle θr and the vehicle speed V may be detected at the vehicle-side ECU 100, and may be sent to the EPS-side ECU 200. The actual steering angular velocity ωr may be calculated by performing the difference calculation with respect to the rotational angle detected by the motor angle sensor and using the gear ratio, or may be calculated by performing the difference calculation with respect to the actual steering angle θr. It is possible to insert a low pass filter (LPF) at the final stage of the EPS-state quantity detecting section 210 to reduce a high frequency noise, and in this case, it is possible to calculate the actual steering angular velocity ωr by a high pass filter (HPF) and a gain.

The switch judging and gradual-change gain generating section 220 performs a switch judging between the automatic steering and the manual steering based on the switch signal SW from the vehicle-side ECU 100 and the steering torque Tt, and determines gradual-change gains based on the judged result. The switch judging and gradual-change gain generating section 220 obtains a steering angle control-output gradual-change gain Gfa1, a velocity control gradual-change gain Gfa2, a velocity command gradual-change gain Gfa3, a steering angle command gradual-change gain Gfa4, an assist control-output gradual-change gain Gft1 and an assist map gradual-change gain Gft2, the gradual-change gains Gfa1 and Gft1 are inputted into the switching section 240, the gradual-change gains Gfa2, Gfa3 and Gfa4 are inputted into the steering angle control section 300, and the gradual-change gain Gft2 is inputted into the assist control section 230. The detail of the switch judging and gradual-change gain generating section 220 will be described later.

The steering angle control section 300 calculates a steering angle control current command value IrefP1 by using the steering angle command value θref from the vehicle-side ECU 100, the actual steering angle θr, the actual steering angular velocity ωr, the steering torque Tt, the vehicle speed V and the gradual-change gains Gfa2, Gfa3 and Gfa4 in order to perform the steering angle control. The steering angle control current command value IreFP1 is inputted into the switching section 240. Moreover, it is possible to calculate the actual steering angular velocity ωr not at the EPS-state quantity detecting section 210 but at steering angle control section 300. The detail of the steering angle control section 300 will be described later.

The assist control section 230 comprises, for example, a current command value calculating section 31, a current limiting section 33, a compensation signal generating section 34 and an adding section 32A in a configuration example in FIG.2 in order to perform the assist control, and calculates an assist control current command value IrefT1 equivalent to a current command value Irefm in FIG.2 based on the steering torque Tt and the vehicle speed V and by using an assist map. However, the assist control section 230 is different from the configuration example shown in FIG.2, inputs the assist map gradual-change gain Gft2 outputted from the switch judging and gradual-change gain generating section 220, multiplies an output (an assist map output current) from the current command value calculating section 31 with the gradual-change gain Gft2, and inputs the multiplied result into the adding section 32A. The assist map used at the current command value calculating section 31 is a map that defines a characteristic of a current command value to the steering torque Tt, is vehicle speed-sensitive, and has a characteristic that the current command value decreases as the vehicle speed V increases. Besides, the current limiting section 33 and/or the compensation signal generating section 34 may be removed.

The switching section 240 calculates a current command value Iref by using the steering angle control current command value IrefP1, the assist control current command value IrefT1 and the gradual-change gains Gfa1 and Gft1. The detail of the switching section 240 will be described later.

The current control and driving section 250 comprises, for example, the subtracting section 32B, the PI-control section 35, the PWM-control section 36 and the inverter 37 in the configuration example in FIG.2, and drives and controls the motor by using the current command value Iref and the motor current Im detected by the motor current detector 38 and by the same operations as the configuration example shown in FIG.2.

The plant 400 is a physical model of a control target that simulates a characteristic of the driver in the steering of the handle and a mechanical characteristic of the EPS and the vehicle, and comprises a driver steering transfer characteristic 410 and a mechanical transfer characteristic 420. A mechanical system operates based on a handle manual input torque Th caused by the steering of the driver and the motor current Im from the EPS-side ECU 200, and this causes a state information EV with respect to the vehicle and the EPS, so that the mechanical transfer characteristic 420 outputs the state information EV. The vehicle-state quantity detecting section 110 in the vehicle-side ECU 100 and the EPS-state quantity detecting section 210 in the EPS-side ECU 200 detect the vehicle-state quantity Cv and the EPS-state quantity respectively from the state information EV. Since the handle manual input torque Th caused by steering of the driver occurs depending on the handle angle $\theta h$ included in the state information EV, the driver steering transfer characteristic 410 outputs the handle manual input torque Th, and the handle manual input torque Th is inputted into the mechanical transfer characteristic 420.

Next, the switch judging and gradual-change gain generating section 220, the steering angle control section 300 and the switching section 240 in the EPS-side ECU 200 will be described in detail.

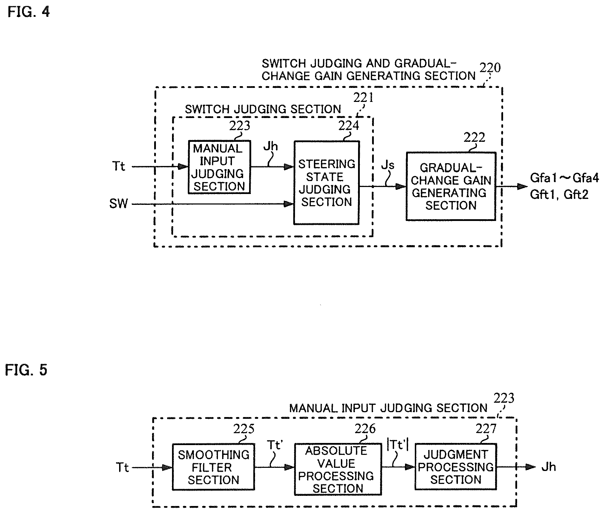

FIG.4 shows a configuration example of the switch judging and gradual-change gain generating section 220, and the switch judging and gradual-change gain generating section 220 comprises a switch judging section 221 and a gradual-change gain generating section 222, and the switch judging section 221 comprises a manual input judging section 223 and a steering state judging section 224.

The manual input judging section 223 judges whether the manual input is performed or not by using the steering torque Tt. A configuration example of the manual input judging section 223 is shown in FIG.5. The manual input judging section 223 comprises a smoothing filter section 225, an absolute value processing section 226 and a judgment processing section 227. The smoothing filter section 225 has a smoothing filter, smooths the steering torque Tt by the smoothing filter, and outputs a steering torque Tt' obtained after the smoothing. The steering torque Tt' is inputted into the absolute value processing section 226, and the absolute value processing section 226 outputs an absolute value (an absolute value data) |Tt'| of the steering torque Tt'. The absolute value |Tt'| is inputted into the judgment processing section 227. The judgment processing section 227 compares a predetermined threshold Tth and the absolute value |Tt'|, judges that "presence of the manual input" when the absolute value |Tt'| is larger than or equal to the threshold Tth, judges that "absence of the manual input" when the absolute value |Tt'| is smaller than the threshold Tth, and outputs the judged result as a manual input judgment signal Jh.

The steering state judging section 224 judges a steering state by the switch signal SW from the vehicle-side ECU 100 and the manual input judgment signal Jh. When the switch signal SW indicates the "assist control mode" or the manual input judgment signal Jh indicates that "presence of the manual input", the steering state judging section 224 judges that the steering state is the "manual steering". Otherwise, that is, when the switch signal SW indicates the "steering angle control mode" and the manual input judgment signal Jh indicates that "absence of the manual input", the steering state judging section 224 judges that the steering state is the "automatic steering". The judged result is outputted as a steering state judgment signal Js.

As well, it is possible to judge the steering state by the manual input judgment signal Jh alone. That is, the steering state judging section 224 may judge that the steering state is the "manual steering" when the manual input judgment signal Jh indicates that "presence of the manual input", and may judge that the steering state is the "automatic steering" when the manual input judgment signal Jh indicates that "absence of the manual input".

The gradual-change gain generating section 222 determines the gradual-change gains based on the steering state judgment signal Js. The gradual-change gains take various values depending on the steering state, and the gradual-change gain generating section 222 judges the steering state due to the steering state judgment signal Js.

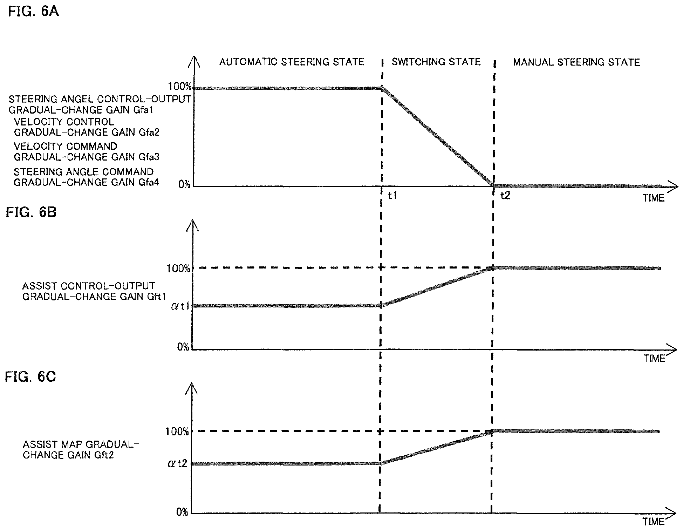

The gradual-change gains Gfa1, Gfa2, Gfa3 and Gfa4 are "100%" in the automatic steering state, are "0%" in the manual steering state, and are gradually changed in the case of transferring from the automatic steering state to the manual steering and in the case of transferring from the manual steering to the automatic steering state. For example, in the case of transferring from the automatic steering state to the manual steering, the gradual-change gains Gfa1 to Gfa4 are changed as shown in FIG.6A. That is, the gradual gains successively decrease from the time point t1 when the steering state judgment signal Js is changed from the "automatic steering" to the "manual steering", and become "0%" at the time point t2. On the contrary, in the case of transferring from the manual steering to the automatic steering state, the gradual-change gains successively increase from the time point when the steering state judgment signal Js is changed to the "automatic steering". In the case that the steering state judgment signal Js is changed during the decrease or the increase in the gradual-change gains (hereinafter this state of the decrease or the increase is referred to a "switching state"), the gradual-change gains turn to increase if decreasing, and turn to decrease if increasing.

As well, the gradual-change gains are changed linearly in the switching state in FIG.6A, however, in order to make the switching operation smooth, they may be changed like an S-shaped bend, and it is possible to use the gradual-change gains changed linearly through such an LPF as a primary LPF whose cutoff frequency is 2 [Hz]. Further, the gradual-change gains Gfa1 to Gfa4 do not need to similarly change in conjunction, and may change independently.

The assist control-output gradual-change gain Gft1 is $\alpha$t1 [%] ($0 \le \alpha$t1 $\le 100$) in the automatic steering state, is "100%" in the manual steering state, and is gradually changed in the switching state as with the gradual-change gains Gfa1 to Gfa4, as shown in FIG.6B. The assist map gradual-change gain Gft2 is $\alpha$t2 [%] ($0 \le \alpha$t2 $\le 100$) in the automatic steering state, is "100%" in the manual steering state, and is gradually changed in the switching state as with the gradual-change gains Gfa1 to Gfa4, as shown in FIG.6C.

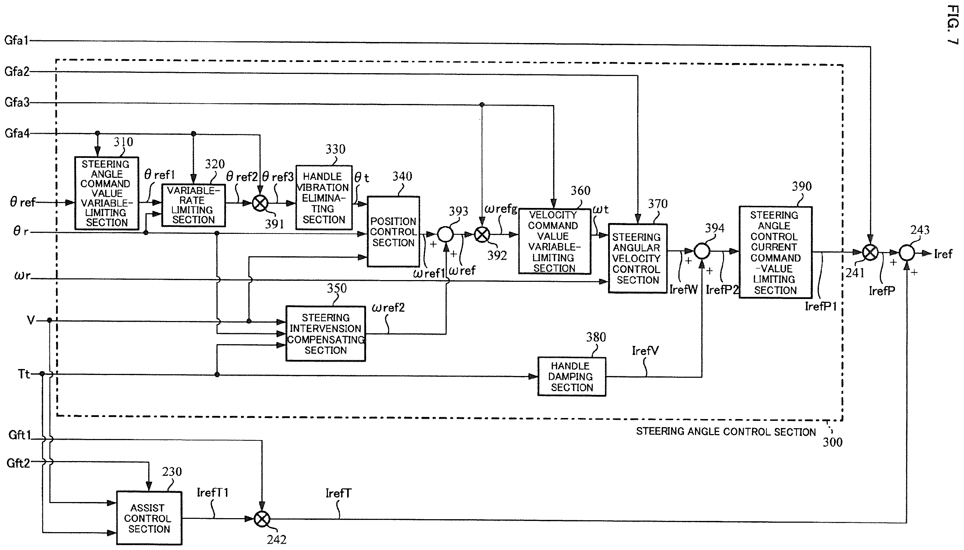

A configuration example of the steering angle control section 300 and the switching section 240 is shown in FIG.7. The steering angle control section 300 comprises a steering angle command value variable-limiting section 310, a variable-rate limiting section 320, a handle vibration eliminating section 330, a position control section 340, a steering intervention compensating section 350, a velocity command value variable-limiting section 360, a steering angular velocity control section 370, a handle damping section 380, a steering angle control current command-value limiting section 390, multiplying sections 391 and 392, and adding sections 393 and 394, and the switching section 240 comprises multiplying sections 241 and 242 and an adding section 243.

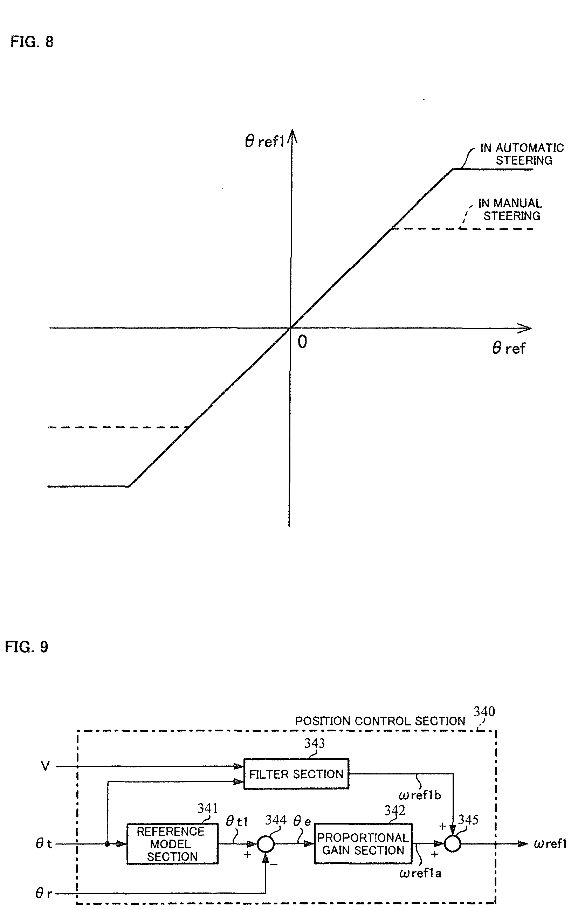

The steering angle command value variable-limiting section 310 in the steering angle control section 300 limits the steering angle command value θref which is received from the vehicle-side ECU 100 and is used for the automatic steering or the like by setting limit values (an upper limit value and a lower limit value) in order to prevent an abnormal value and an excessive value caused by a communication error or the like from being inputted into the steering control, and outputs the limited value as a steering angle command value θref1. The steering angle command value variable-limiting section 310 sets the limit values depending on the steering angle command gradual-change gain Gfa4 so as to set appropriate limit values in the automatic steering state and the manual steering state. For example, as shown in FIG.8, the steering angle command value variable-limiting section 310 judges the case where the steering angle command gradual-change gain Gfa4 is "100%" to be the automatic steering state, and limits the steering angle command value θref with the limit value shown by the solid line. The steering angle command value variable-limiting section 310 judges the case where the steering angle command gradual-change gain Gfa4 is "0%" to be the manual steering state, and limits the steering angle command value θref with the limit value whose absolute value is smaller than in the automatic steering state as shown by the broken line. The steering angle command value variable-limiting section 310 judges the case where the steering angle command gradual-change gain Gfa4 is between "0%" and "100%" to be the switching state, and limits the steering angle command value θref with a value between the solid line and the broken line. In the switching state, it is possible to limit the steering angle command value θref with the limit value of the automatic steering state shown by the solid line or the limit value of the manual steering state shown by the broken line.

As well, a magnitude (an absolute value) of the upper limit value and a magnitude of the lower limit value may be different.

In order to avoid sharply changing the steering angle control current command value being an output of the steering angle control due to a sudden change of the steering angle command value θref, the variable-rate limiting section 320 limits a change amount of the steering angle command value θref1 by setting a limit value, and outputs a steering angle command value 9ref2. For example, a difference between the previous and the present steering angle command values θref1 is defined as the change amount. In the case that the absolute value of the change amount is larger than a predetermined value (a limit value), the variable-rate limiting section 320 performs the addition or the subtraction to the steering angle command value θref1 so that the absolute value of the change amount becomes the limit value, and outputs the result as the steering angle command value θref2. In the case that the absolute value of the change amount is smaller than or equal to the limit value, the variable-rate limiting section 320 outputs the steering angle command value θref1 as the steering angle command value θref2 without changing it. As with the steering angle command value variable-limiting section 310, the variable-rate limiting section 320 sets the limit value depending on the steering angle command gradual-change gain Gfa4 so as to set an appropriate limit value in the automatic steering state and the manual steering state. The variable-rate limiting section 320 judges the steering state by the steering angle command gradual-change gain Gfa4. The variable-rate limiting section 320 sets the limit value to a predetermined limit value in the automatic steering state, and sets the limit value to zero in the manual steering state so that the steering angle command value θref2 is not changed and becomes constant. Although the variable-rate limiting section 320 uses an intermediate value between both limit values in the switching state, it may use the limit value of the automatic steering state or the limit value of the manual steering state.

Besides, it is possible to limit the change amount by setting an upper limit value and a lower limit value instead of setting the limit value for the absolute value of the change amount.

At the multiplying section 391, the steering angle command value θref2 is multiplied with the steering angle command gradual-change gain Gfa4, and the multiplied result is outputted as a steering angle command value θref3. This makes a target steering angle θt which is outputted from the handle vibration eliminating section 330 as described below in the switching state from the automatic steering state to the manual steering state, gradually approximate zero, and can make the steering angle control operate to a neutral state.

The handle vibration eliminating section 330 reduces a vibration frequency component included in the steering angle command value θref3. In the automatic steering, when the steering command is changed, a frequency component (around 10 [Hz]) exciting a vibration caused by the springiness of the torsion bar and an inertia moment of the steering wheel, occurs in the steering angle command value θref3. The handle vibration eliminating section 330 reduces the handle vibration frequency component included this steering angle command value θref3 by a filter processing using an LPF, a notch filter and so on or a phase delay compensation, and outputs the target steering angle θt. As a filter, any filter may be used if it lowers a gain in a band of the handle vibration frequency and is possible to provide for the ECU. Providing the multiplying section 391 multiplying the steering angle command gradual-change gain Gfa4 in front of the handle vibration eliminating section 330, enables the reduction of the handle vibration frequency component caused by multiplying the steering angle command gradual-change gain Gfa4.

As well, it is possible to omit the handle vibration eliminating section 330 in such a case that the handle vibration frequency component is minute.

The position control section 340 calculates a steering angular velocity command value (a basic steering angular velocity command value) ωref1 for making the actual steering angle θr approximate the target steering angle θt based on the target steering angle θt and the actual steering angle θr. In order to extend a control band of the actual steering angle θr to the target steering angle θt toward a high frequency side, the reference model and the feed-forward filter (the FF filter) are used. Thereby, the responsibility (the following-up property) of the steering angle control can be improved.

A configuration example of the position control section 340 is shown in FIG.9. The position control section 340 comprises the reference model section 341, a proportional gain section 342, a filter section 343, a subtracting section 344 and an adding section 345.

The reference model section 341 has a transfer function $G_{model}$ defined by the following Expression 1, and transforms the target steering angle θt into a target steering angle θt1 by using the transfer function $G_{model}$.

[Expression 1]

$$G_{model} = \frac{1}{\left(T_{m1}s + 1\right)^4 \left(T_{m2}s + 1\right)^2}$$

Here, $T_{m1}=1/(2\pi\times f_{m1})$, $T_{m2}=1/(2\pi\times f_{m2})$, $f_{m1}$ and $f_{m2}$ are cutoff frequencies, and "s" is a Laplace operator.

The transfer function $G_{model}$ defines a desired transfer characteristic in a method of the model reference control. Although the order of the denominator is six and the order of the numerator is zero in the above Expression 1, the orders are not limited to these. The deviation θe between the target steering angle θt1 and the actual steering angle θr is obtained at the subtracting section 344, and the deviation θe is inputted into the proportional gain section 342. The proportional gain section 342 multiplies the deviation θe with the proportional gain Kpp, and calculates a steering angular velocity command value ωref1a by the P-control.

The filter section 343 has the FF filter, and transforms the target steering angle θt into a steering angular velocity command value ωref1b by the FF filter. A transfer function Gf of the FF filter is defined by the following Expression 2.

[Expression 2]

$$G_f = K_{ff} \frac{G_{model}}{P_{\omega\theta}}$$

"Kff" in the Expression 2 is an FF filter gain. "$P_{\omega\theta}$" is a transfer function from the steering angular velocity command value ωref, which is outputted from the adding section 393 described below, to the actual steering angle θr, and is predefined by an identification by fitting, and so on. The FF filter gain Kff is changed depending on the vehicle speed V. Since the responsibility of the actual steering angle to the steering angle command value is changed by changing the road surface reaction force and the steering intervention compensation map described below depending on the vehicle speed, the FF filter gain Kff is made vehicle speed-sensitive. This enables the responsibility of the actual steering angle to the steering angle command value to be almost constant without depending on the vehicle speed.

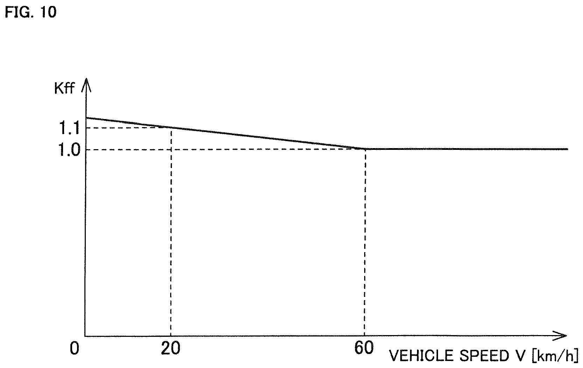

As shown in FIG.10, for example, the FF filter gain Kff is changed so as to monotonically decrease as the vehicle speed V increases from 0 [km/h], to become "1.1" when the vehicle speed V is 20 [km/h], to become "1.0" when the vehicle speed V is 60 [km/h], and to be kept constant at "1.0" after that.

The steering angular velocity command values ωref1a and ωref1b are added at the adding section 345, and the added result is outputted as the steering angular velocity command value ωref1.

The steering intervention compensating section 350 calculates a steering angular velocity command value (a compensatory steering angular velocity command value) ωref2 for compensating the steering intervention corresponding to the steering torque Tt and the actual steering angle θr. A value obtained by adding the steering angular velocity command value ωref2 and the steering angular velocity command value ωref1 from the position control section 340 becomes a steering angular velocity command value ωref. The function of the steering intervention compensating section 350 enables generation of the steering angular velocity command value to mitigate occurrence of the steering torque, and can achieve the steering intervention during the automatic steering.

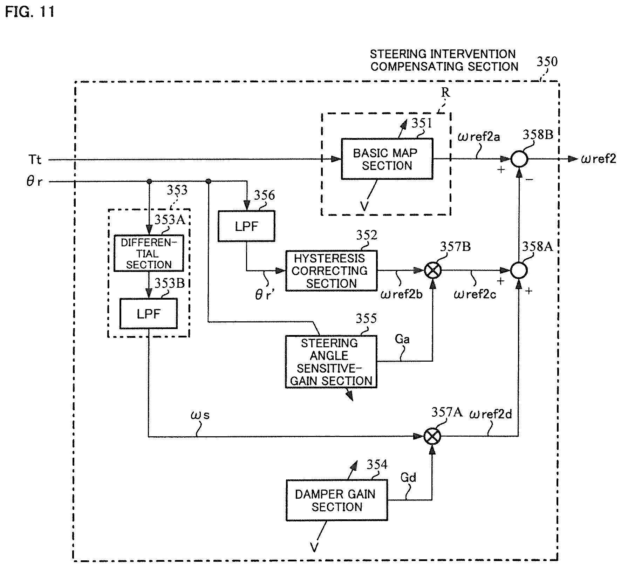

A configuration example of the steering intervention compensating section 350 is shown in FIG.11. The steering intervention compensating section 350 comprises a basic map section 351, a hysteresis correcting section 352, a steering angular velocity calculating section 353, a damper gain section 354, a steering angle sensitive-gain section 355, an LPF 356, multiplying sections 357A and 357B, an adding section 358A and a subtracting section 358B. The steering angular velocity calculating section 353 comprises a differential section 353A and an LPF 353B.

The steering torque Tt inputted into the steering intervention compensating section 350 is also inputted into the basic map section 351. The actual steering angle θr is inputted into the LPF 356, the steering angular velocity calculating section 353 and the steering angle sensitive-gain section 355. The LPF 356 is constituted by the primary LPF or the second order LPF whose cutoff frequency is 5.0 [Hz], performs a filter process to the actual steering angle θr, and calculates an actual steering angle θr'. The steering angular velocity calculating section 353 differentiates the actual steering angle θr at the differential section 353A, performs a filter process to the differentiated result by the LPF 353B, and calculates the steering angular velocity ωs.

The basic map section 351 has the basic map and calculates the steering angular velocity command value (the first velocity command value) ωref2a by using the basic map. The basic map is a map, which determines a characteristic of the steering angular velocity command value to the steering torque, changes its value depending on the vehicle speed, and calculates the steering angular velocity command value ωref2a by using the steering torque Tt and the vehicle speed V.

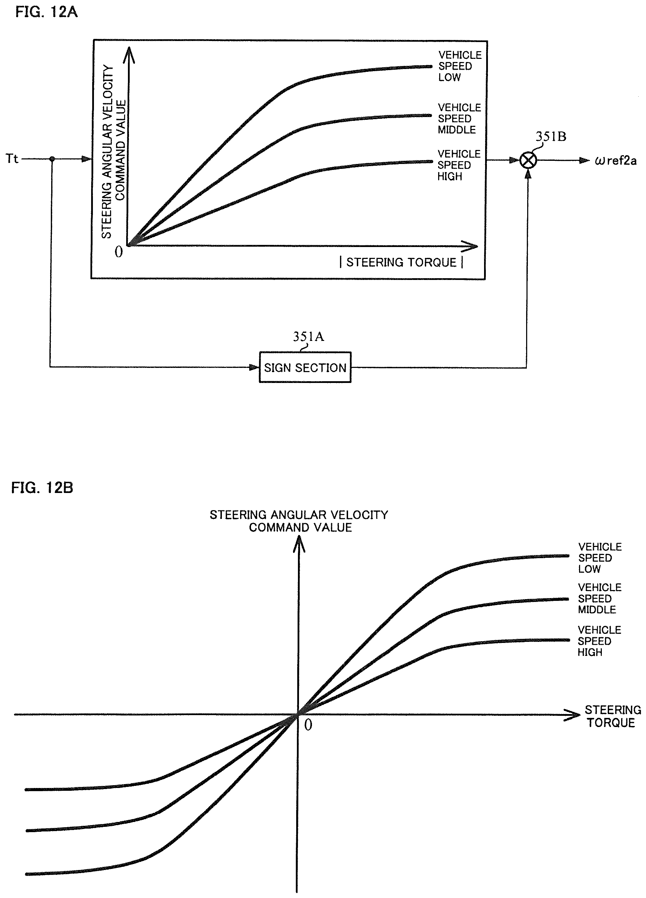

The basic map is adjusted by tuning. For example, as shown in FIG.12A, the steering angular velocity command value increases as the magnitude (the absolute value) of the steering torque Tt increases, and decreases as the vehicle speed increases. Thus, the higher the vehicle speed V is, the smaller the steering angular velocity command value is, and the steering feeling is heavy at the high vehicle speed. On the contrary, the steering feeling is light at the low vehicle speed. The assist map used at the assist control section 230 also has a characteristic that the assist control current command value decreases as the vehicle speed increases. In the case that the steering intervention is performed by the driver at a high speed running, increases in the steering angular velocity command value and the assist control current command value are suppressed, the steering does not become sudden, and the safe steering is enabled.

As well, in FIG.12A, the sign section 351A outputs a sign (whose value is "+1" or "-1") of the steering torque Tt to the multiplying section 351B. The basic map section 351 obtains the magnitude of the steering angular velocity command value ωref2a from the magnitude of the steering torque Tt by using the basic map, multiplies the obtained magnitude with the sign of the steering torque Tt, and obtains the steering angular velocity command value ωref2a. As shown in FIG.12B, the basic map may be prepared depending on a positive value or a negative value of the steering torque Tt. In this case, the change aspect of the steering angular velocity command value ωref2a in the positive value of the steering torque Tt may be different that in the negative value of the steering torque Tt.

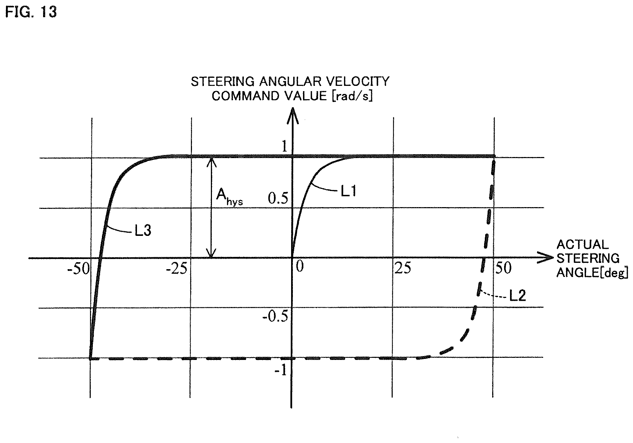

The hysteresis correcting section 352 calculates the steering angular velocity command value (the second velocity command value) ωref2b such that the desired hysteresis characteristic can be obtained when the steering intervention is performed. For example, in the case that the actual steering angle changes 0 [deg] → +50 [deg] → -50 [deg] → +50 [deg], the steering angular velocity command value has a hysteresis characteristic shown in FIG.13. In FIG.13, "A_{hys}" represents a hysteresis width.

In order to realize such a hysteresis characteristic, in the case that the actual steering angle θr' changes to the positive direction against the inputted actual steering angle θr', the hysteresis correcting section 352 calculates the steering angular velocity command value ωref2b in accordance with the following Expression 3. In the case that the actual steering angle θr' changes to the negative direction against the inputted actual steering angle θr', the hysteresis correcting section 352 calculates the steering angular velocity command value ωref2b in accordance with the following Expression 4. In the following expressions 3 and 4, it is set to "x=θr'" and "y=ωref2b".

[Expression 3]

$$y = A_{hys}\left[1 - \exp\left\{-a\left(x - b\right)\right\}\right]$$

[Expression 4]

$$y = -A_{hys}\left[1 - \exp\left\{a(x-b)\right\}\right]$$

The values of x and y when the steering is returned, that is, the changing direction of the actual steering angle changes, are defined as x1 and y1, respectively. The x1 and y1 are substituted into the above Expressions 3 and 4. By solving the Expressions 3 and 4 for the "b", the following Expressions 5 and 6 are obtained.

[Expression 5]

$$b = x_1 + \frac{1}{a}\log_e\left(1 - \frac{y_1}{A_{hys}}\right)$$

[Expression 6]

$$b = x_1 - \frac{1}{a}\log_e\left(1 + \frac{y_1}{A_{hys}}\right)$$

The hysteresis width $A_{hys}$, and the values "a, x1 and y1" are preset. In the case that the actual steering angle θr' changes in the positive direction, the steering angular velocity command value ωref2b is calculated from the Expression 3 using the value "b" which is calculated in accordance with the Expression 5. In the case that the actual steering angle θr' changes in the negative direction, the steering angular velocity command value ωref2b is calculated from the Expression 4 using the value "b" which is calculated in accordance with the Expression 6.

In FIG.13, the hysteresis width $A_{hys}$ is set to 1.0 [Nm] and the value "a" is set to "0.3", and the actual steering angle changes 0 [deg] → +50 [deg] → -50 [deg] → +50 [deg]. Since the actual steering angle θr' is started from an initial value 0 [deg] and the steering angular velocity command value ωref2b is set to "0" at the starting point, both x1 and y1 are zero and then "b" is equal to zero. By using this value "b", the actual steering angle θr' changes from 0 [deg] to +50 [deg], that is, the actual steering angle θr' changes to the positive direction. In accordance with the Expression 3, the steering angular velocity command value ωref2b changes along a curve "L1" (a thin solid line). When the actual steering angle θr' arrives at +50 [deg] and the steering is returned from the positive direction to the negative direction, the value "b" is calculated from the Expression 6 using x1 and y1 which are the values of x and y at this returning point. By using this value "b", the actual steering angle θr' changes from +50 [deg] to -50 [deg], that is, the actual steering angle θr' changes to the negative direction. In accordance with the Expression 4, the steering angular velocity command value ωref2b changes along a curve "L2" (a broken line). When the actual steering angle θr' arrives at -50 [deg] and the steering is returned from the negative direction to the positive direction, the value "b" is calculated from the Expression 5 using x1 and y1 which are the values of x and y at this returning point. By using this value "b", the actual steering angle θr' changes from -50 [deg] to +50 [deg], that is, the actual steering angle θr' changes to the positive direction. In accordance with the Expression 3, the steering angular velocity command value ωref2b changes along a curve "L3" (a thick solid line).

The changing direction of the actual steering angle θr' is determined as follows. The previous actual steering angle θr' is held as an actual steering angle θrp. The changing direction is determined based on the sign of a difference Δθr between the held actual steering angle θrp and the actual steering angle θr' (Δθr = θr' - θrp). Or the changing direction may be determined by using the steering angular velocity ωs which is outputted from the steering angular velocity calculating section 353.

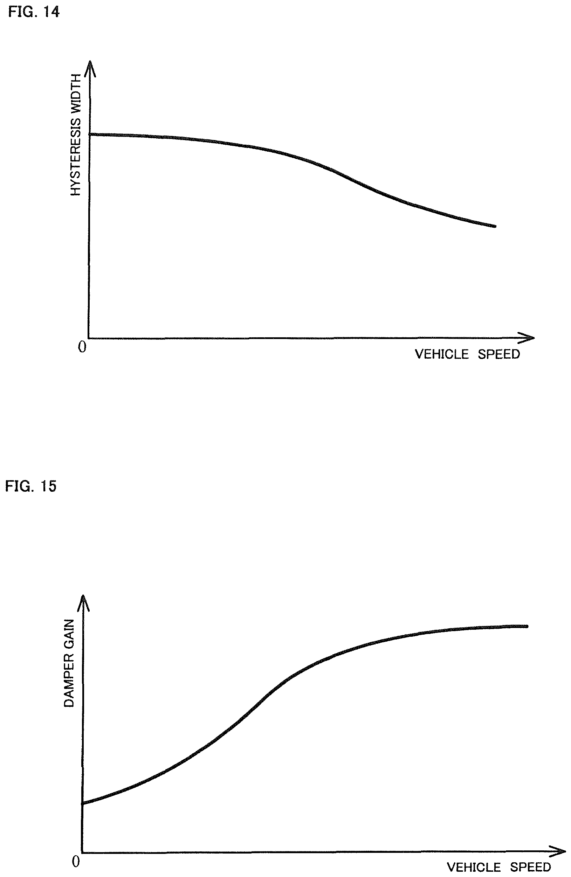

As well, the hysteresis width $A_{hys}$ may changes depending on the vehicle speed V. For example, as shown in FIG.14, the hysteresis width $A_{hys}$ is set to the smaller value as the vehicle speed is higher. Thereby, the hysteresis feeling can be small and the linear steering feeling to the actual steering angle can be realized.

The damper gain section 354 outputs a damper gain Gd that is multiplied with the steering angular velocity ωs. The steering angular velocity ωs multiplied with the damper gain Gd is inputted to the adding section 358A as the steering angular velocity command value ωref2d. The damper gain Gd is obtained from a damper gain map that the damper gain section 354 has. By making this damper gain map be vehicle speed-sensitive, the steering feeling can have a viscous feeling in the steering intervention when operating the automatic steering. In a case that the driver releases the handle for returning the automatic steering after the steering intervention is performed, the steeply change of the steering angle is occurred. The damper gain map can also be used as a function to mitigate the steeply change of the steering angle. For example, as shown in FIG.15, the viscous feeling can be enhanced by making the damper gain Gd be larger as the vehicle speed becomes higher.

As well, not the steering angular velocity ωs outputted from the steering angular velocity calculating section 353 but the actual steering angular velocity ωr inputted into the steering control section 300 may be used as the steering angular velocity that is multiplied with the damper gain Gd. In this case, the steering angular velocity calculating section 353 can be removed. The motor velocity may be used instead of the steering angular velocity.

The steering angle sensitive-gain section 355 outputs the steering angle sensitive-gain Ga which is multiplied with the steering angular velocity command value ωref2b at the multiplying section 357B. The steering angular velocity command value ωref2b multiplied with the steering angle sensitive-gain Ga is inputted into the adding section 358A as the steering angular velocity command value ωref2c. The steering angular velocity command value ωref2c is added to the steering angular velocity command value ωref2d at the adding section 358A. The added result is subtracted from the steering angular velocity command value ωref2a, and the subtracted result becomes the steering angular velocity command value ωref2.

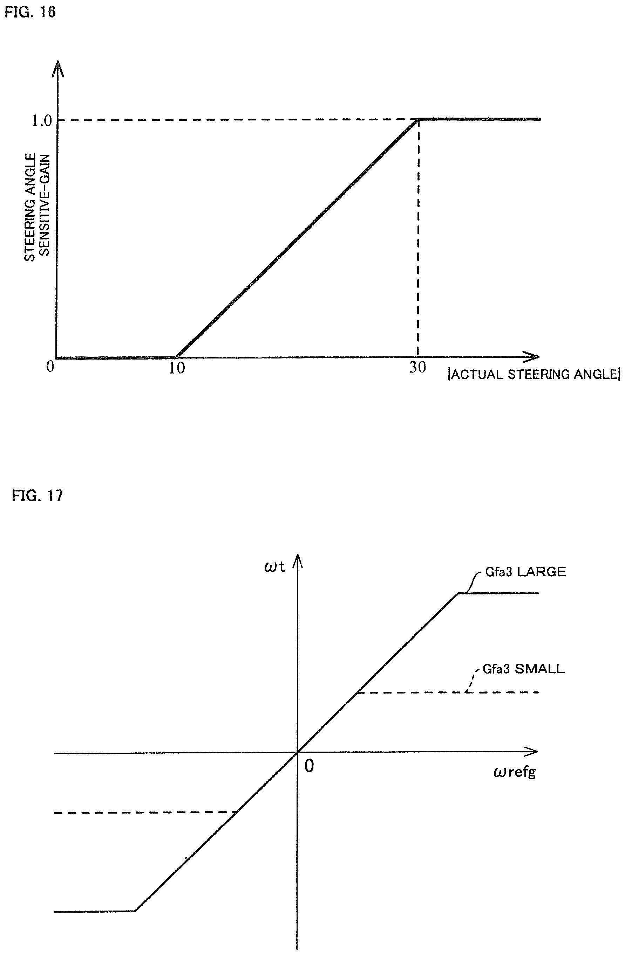

The steering angle sensitive-gain Ga changes depending on the magnitude (the absolute value) of the actual steering angle θr. For example, as shown in FIG.16, the steering angle sensitive-gain Ga is "0" and is a constant value when the magnitude of the actual steering angle θr is smaller than or equal to 10 [deg], is "1.0" and is a constant value when the magnitude of the actual steering angle θr is larger than or equal to 30 [deg], and increases linear to the actual steering angle θr when the magnitude of the actual steering angle θr is between 10 [deg] and 30 [deg].

As well, when the magnitude of the actual steering angle θr is between 10 [deg] and 30 [deg], the steering angle sensitive-gain Ga may be changed nonlinearly. Boundary values that the magnitude of the steering angle sensitive-gain Ga is constant may be the values other than 10 [deg] and 30 [deg]. The steering angle sensitive-gain Ga changes depending on the magnitude of the actual steering angle θr. However, the steering angle sensitive-gain Ga may change the value depending on a positive value or a negative value of the actual steering angle θr. In this case, the change characteristic of the steering angle sensitive-gain Ga in the positive value of the actual steering angle θr may be different that in the negative value of the actual steering angle θr.

Not the actual steering angle θr but the actual steering angle θr' passing through the LPF 356 may be inputted into the steering angle sensitive-gain section 355, and the steering angle sensitive-gain Ga may change depending on the magnitude of the actual steering angle θr'.

The steering angular velocity command value ωref1 outputted from the position control section 340 and the steering angular velocity command value ωref2 outputted from the steering intervention compensating section 350 are added at the adding section 393 in the steering angle control section 300, and the added result is outputted as the steering angular velocity command value ωref.

The steering angular velocity command value ωref is multiplied with the velocity command gradual-change gain Gfa3 at the multiplying section 392, and the multiplied result is outputted as a steering angular velocity command value ωrefg. The velocity command gradual-change gain Gfa3 is used in order to achieve the smooth switching in the case of switching from the manual steering state to the automatic steering state. Besides, the velocity command gradual-change gain Gfa3 is changed in synchronization with the steering angle control-output gradual-change gain Gfa1 by which the steering angle control current command value IrefP1 is multiplied (the synchronization may not be perfect).

The velocity command value variable-limiting section 360 limits the steering angular velocity command value ωrefg by setting limit values (an upper limit value and a lower limit value), and outputs a target steering angular velocity ωt. The limit values are set depending on the velocity command gradual-change gain Gfa3. For example, when the velocity command gradual-change gain Gfa3 is smaller than a predetermined threshold, magnitudes (absolute values) of the limit values are small values ("Gfa3 SMALL") as shown by the broken line in FIG.17, and when it is larger than or equal to the predetermined threshold, the magnitudes of the limit values are increased to the values ("Gfa3 LARGE") shown by the solid line.

As well, it is possible that the predetermined threshold is set to any value of the velocity command gradual-change gain Gfa3 in the switching state, the magnitudes of the limit values are fixed at the small values ("Gfa3 SMALL") shown by the broken line when the velocity command gradual-change gain Gfa3 is smaller than the predetermined threshold, and the magnitudes of the limit values are gradually increased to the values ("Gfa3 LARGE") shown by the solid line. The magnitude of the upper limit value and the magnitude of the lower limit value may be different.

The steering angular velocity control section 370 inputs the target steering angular velocity ωt, the actual steering angular velocity ωr and the velocity control gradual-change gain Gfa2, and calculates a steering angle control current command value IrefW by a proportional preceding-type PI (I-P) control so that the actual steering angular velocity ωr follows the target steering angular velocity ωt.

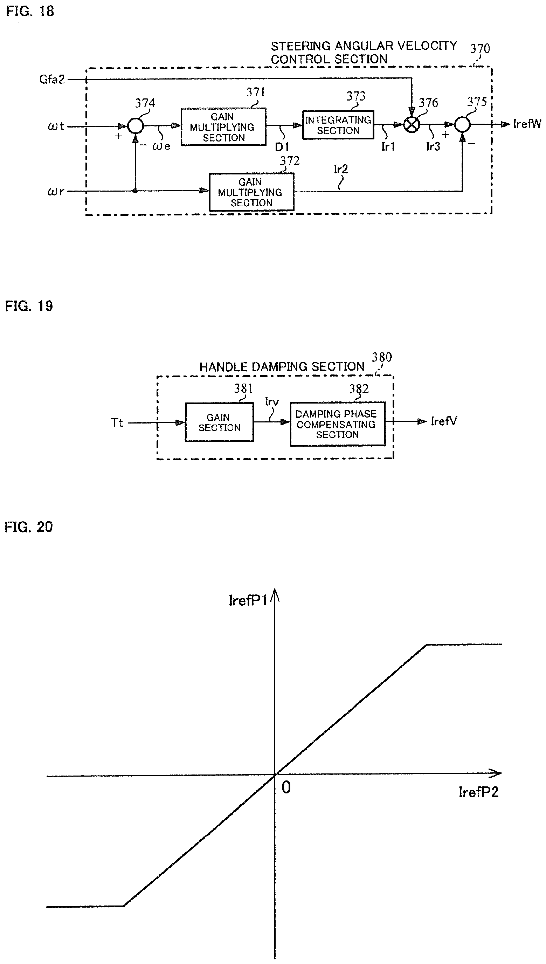

A configuration example of the steering angular velocity control section 370 is shown in FIG.18. The steering angular velocity control section 370 comprises gain multiplying sections 371 and 372, an integrating section 373, subtracting sections 374 and 375, and a multiplying section 376.

The gain multiplying section 371 multiplies a deviation ωe (= ωt - ωr) between the target steering angular velocity ωt and the actual steering angular velocity ωr, which is calculated at the subtracting section 374, with a gain Kvi, and outputs an operation amount D1 which is the multiplied result. The integrating section 373 integrates the operation amount D1, and calculates a control amount Ir1. At the multiplying section 376, the control amount Ir1 is multiplied with the velocity control gradual-change gain Gfa2, and the multiplied result is outputted as a control amount Ir3. The multiplication of the velocity control gradual-change gain Gfa2 is performed in order to achieve the smooth switching between the manual steering state and the automatic steering state, and this can mitigate an influence of accumulating an integral value in the steering angular velocity control at the time of the switching. The gain multiplying section 372 multiplies the actual steering angular velocity ωr with a gain Kvp, and outputs a control amount Ir2. At the subtracting section 375, a deviation (Ir3 - Ir2) between the control amounts Ir3 and Ir2 is calculated, and the subtracted result is outputted as the steering angle control current command value IrefW. Moreover, as the integral of the integrating section 373, any method can be used if it is an integral method possible to achieve in the implementation, and the integrating section 373 can be constituted of a primary delay transfer function and a gain in the case of using pseudo-integral. Further, the velocity control gradual-change gain Gfa2 may be changed in synchronization with the steering angle control-output gradual-change gain Gfa1.

As well, although the steering angular velocity control section 370 uses the I-P control, a control method generally used may be used if it can make the actual steering angular velocity follow the target steering angular velocity. For example, it is possible to use a PI-control, a two-degree of freedom PI-control, a model reference control, a model matching control, a robust control, a control method that estimates a disturbance and combines a compensating means for counteracting a disturbance component with a part of it, and so on.

The handle damping section 380 damps the handle vibration based on the steering torque Tt being a torsion bar torque signal. Although the handle vibration eliminating section 330 also has an effect on the handle vibration in the automatic steering, the handle damping section 380 can further improve the effect. The handle damping section 380 damps the handle vibration by a gain and a phase compensation, and outputs a steering angle control current command value IrefV operating to eliminate a twist of the torsion bar. Further, the handle damping section 380 operates to reduce a twist angle, and has also an effect of reducing catching uncomfortable feeling occurring when the manual input of the driver intervenes.

A configuration example of the handle damping section 380 is shown in FIG.19. The handle damping section 380 comprises a gain section 381 and a damping phase compensating section 382. The gain section 381 multiplies the steering torque Tt with a gain Kv, and outputs a control amount Irv. The damping phase compensating section 382 is constituted of, for example, a primary filter, and converts the control amount Irv into the steering angle control current command value IrefV. The damping phase compensating section 382 may be constituted of a phase compensation filter whose order is larger than or equal to two instead of the primary filter.

Further, at the adding section 394, the steering angle control current command value IrefW outputted from the steering angular velocity control section 370 and the steering angle control current command value IrefV outputted from the handle damping section 380, are added, and the added result is outputted as a steering angle control current command value IrefP2.

The steering angle control current command-value limiting section 390 limits the steering angle control current command value IrefP2 by setting limit values (an upper limit value and a lower limit value) in order to prevent an excessive output, and outputs the steering angle control current command value IrefP1. For example, the steering angle control current command-value limiting section 390 limits the steering angle control current command value IrefP2 by setting the upper limit value and the lower limit value as shown in FIG.20. Moreover, a magnitude (an absolute value) of the upper limit value and a magnitude of the lower limit value may be different.

The switching section 240 comprises the multiplying sections 241 and 242 and the adding section 243.

At the multiplying section 241 of the switching section 240, the steering angle control current command value IrefP1 outputted from the steering angle control section 300 is multiplied with the steering angle control-output gradual-change gain Gfa1 outputted from the switch judging and gradual-change gain generating section 220, and the multiplied result is outputted as a steering angle control current command value IrefP. The steering angle control-output gradual-change gain Gfa1 is used in order to smoothly perform the switching operation between the manual steering state and the automatic steering state and to achieve the uncomfortable feeling to the driver, the safety and so on. At the multiplying section 242, the assist control current command value IrefT1 outputted from the assist control section 230 is multiplied with the assist control-output gradual-change gain Gft1, and the multiplied result is outputted as an assist control current command value IrefT. The assist control-output gradual-change gain Gft1 is used in order to smoothly perform the switching operation between the manual steering state and the automatic steering state and to achieve the steering intervention by the driver in the automatic steering. At the adding section 243, the steering angle control current command value IrefP and the assist control current command value IrefT are added, and the added result is outputted as the current command value Iref.

The assist map gradual-change gain Gft2 used in the above assist control section 230 is also used for the same purpose as the assist control-output gradual-change gain Gft1. In the automatic steering state, setting the gradual-change gain Gft1 to the value αt1 and the assist map gradual-change gain Gft2 to the value αt2 as shown in FIGs. 6B and 6C and adjusting the value αt1 and the value αt2, enable the improvement of the safety of the system and suppression of occurrence of the vibration. Further, if it is possible to maintain the safety of the system in the automatic steering state, it is possible to set the value αt1 to "0%" and the value αt2 to "100%" simply. In this case, since the value αt1 is "0%", the assist control current command value IrefT becomes a zero command, and this means to achieve the steering intervention even without the assist control.

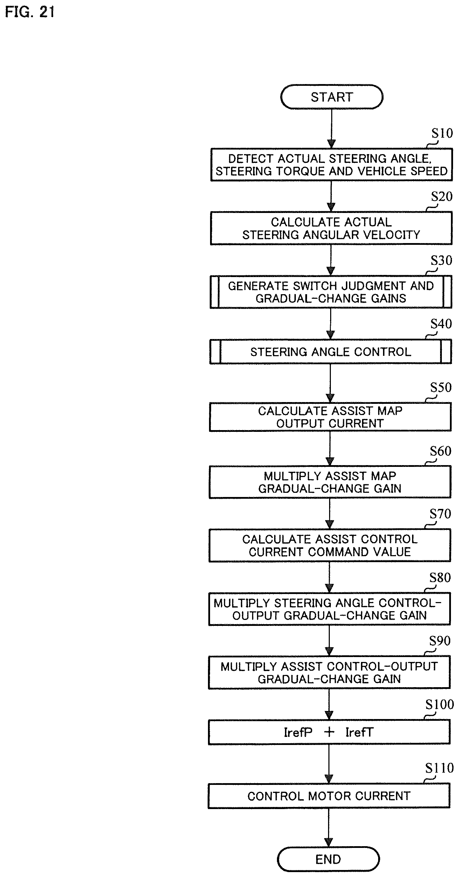

In such a configuration, an operating example of the EPS-side ECU 200 will be described with reference to flowcharts shown in FIGs.21 to 25.

When the operation is started, the EPS-state quantity detecting section 210 detects the actual steering angle $\theta r$, the steering torque Tt and the vehicle speed V (Step S10), inputs the actual steering angle $\theta r$ to the steering angle control section 300, inputs the steering torque Tt to the switch judging and gradual-change gain generating section 220, the steering angle control section 300 and the assist control section 230, and inputs the vehicle speed V to the steering angle control section 300 and the assist control section 230. Furthermore, the EPS-state quantity detecting section 210 calculates the actual steering angular velocity $\omega r$ by the actual steering angle $\theta r$ (Step S20), and inputs the actual steering angular velocity $\omega r$ to the steering angle control section 300.

The switch judging and gradual-change gain generating section 220 inputting the steering torque Tt judges the switching between the automatic steering and the manual steering based on the presence/absence of the input of switch signal SW outputted from the vehicle-side ECU 100, determines the gradual-change gains on the basis of the judged result (Step S30), outputs the gradual-change gains Gfa2, Gfa3 and Gfa4 to the steering angle control section 300, outputs the gradual-change gain Gft2 to the assist control section 230, and outputs the gradual-change gains Gfa1 and the Gft1 to the switching section 240. A detailed operation of the switch judging and gradual-change gain generating section 220 will be described below.

The steering angle control section 300 inputs the steering angle command value $\theta ref$ outputted from the vehicle-side ECU 100, the actual steering angle $\theta r$, the actual steering angular velocity $\omega r$, the steering torque Tt and the vehicle speed V which are outputted from the EPS-state quantity detecting section 210, and the gradual-change gains Gfa2, Gfa3 and Gfa4 outputted from the switch judging and gradual-change gain generating section 220, calculates the steering angle control current command value IrefP1 by using them (Step S40), and inputs the steering angle control current command value IrefP1 to the switching section 240. A detailed operation of the steering angle control section 300 will be described below.

The assist control section 230 inputs the steering torque Tt, the vehicle speed V and the assist map gradual-change gain Gft2, and calculates the assist map output current (current value) by the same operation as the current command value calculating section 31 shown in FIG.2 (Step S50). The assist control section 230 multiplies the assist map output current with the assist map gradual-change gain Gft2 (Step S60), performs the same operations as the adding section 32A, the current limiting section 33 and the compensation signal generating section 34 which are shown in FIG.2 to the multiplied result, calculates the assist control current command value IrefT1 (Step S70), and inputs the assist control current command value IrefT1 to the switching section 240.

The switching section 240 multiplies the inputted steering angle control current command value IrefP1 with the steering angle control-output gradual-change gain Gfa1 at the multiplying section 241 (Step S80), and inputs the steering angle control current command value IrefP being the multiplied result to the adding section 243. Further, the switching section 240 multiplies the inputted assist control current command value IrefT1 with the assist control-output gradual-change gain Gft1 at the multiplying section 242 (Step S90), and inputs the assist control current command value IrefT being the multiplied result to the adding section 243. The adding section 243 adds the steering angle control current command value IrefP and the assist control current command value IrefT (Step S100), and inputs the current command value Iref being the added result to the current control and driving section 250.

By using the current command value Iref and the motor current Im detected by the motor current detector 38, the current control and driving section 250 performs the control so that the motor current Im follows the current command value Iref by the same operations as the subtracting section 32B, the PI-control section 35, the PWM-control section 36 and the inverter 37 which are shown in FIG.2 (Step S110), and drives and controls the motor.

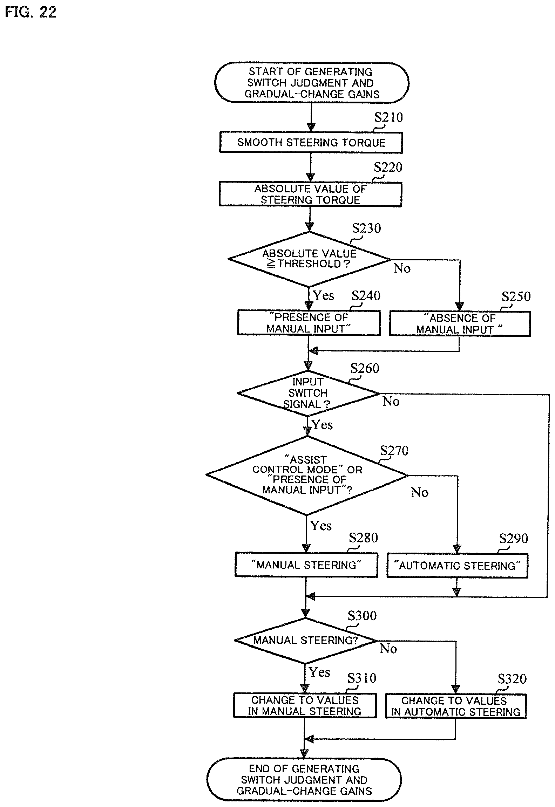

The detail of the operating example of the switch judging and gradual-change gain generating section 220 will be described with reference to a flowchart shown in FIG.22. Moreover, the "manual steering" is set on the steering state judgment signal Js as an initial value in the steering state judging section 224.

The inputted steering torque Tt is inputted into the manual input judging section 223 in the switch judging section 221. The manual input judging section 223 smooths the steering torque Tt at the smoothing filter section 225 (Step S210), and obtains the absolute value |Tt'| of the steering torque Tt' obtained by the smoothing at the absolute value processing section 226 (Step S220). The absolute value |Tt'| is inputted into the judgment processing section 227. When the absolute value |Tt'| is larger than or equal to the threshold Tth (Step S230), the judgment processing section 227 judges that "presence of the manual input" (Step S240). When the absolute value |Tt'| is smaller than the threshold Tth (Step S230), the judgment processing section 227 judges that "absence of the manual input" (Step S250). The judgment processing section 227 inputs the manual input judgment signal Jh being the judged result to the steering state judging section 224.

The steering state judging section 224 confirms whether the switch signal SW is inputted or not (Step S260). The steering state judging section 224 updates the steering state judgment signal Js to the "manual steering" (Step S280) when the switch signal SW indicates the "assist control mode" or the manual input judgment signal Jh indicates that "presence of the manual input" (Step S270), otherwise (Step S270), the steering state judging section 224 updates the steering state judgment signal Js to the "automatic steering" (Step S290). In the case of not inputting the switch signal SW, the steering state judgment signal Js is left as it is. The steering state judgment signal Js is inputted into the gradual-change gain generating section 222.

The gradual-change gain generating section 222 confirms the value of the steering state judgment signal Js (Step S300). When the steering state judgment signal Js is the "manual steering", the gradual-change gain generating section 222 changes the respective gradual-change gains (Gfa1 to Gfa4, Gft1 and Gft2) to the values in the manual steering state (0% for the gradual-change gains Gfa1 to Gfa4, and 100% for the gradual-change gains Gft1 and Gft2) (Step S310). When the steering state judgment signal Js is the "automatic steering", the gradual-change gain generating section 222 changes the respective gradual-change gains to the values in the automatic steering state (100% for the gradual-change gains Gfa1 to Gfa4, the value $\alpha t1$ for the gradual-change gain Gft1, and the value $\alpha t2$ for the gradual-change gain Gft2) (Step S320).

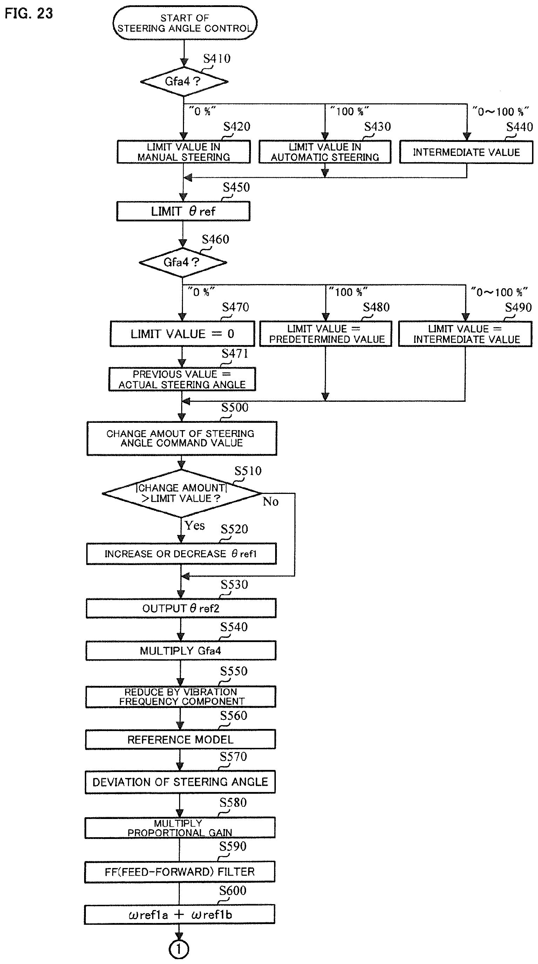

The detail of the operating example of the steering angle control section 300 will be described with reference to flowcharts shown in FIGs.23 to 25.

The steering angle command value variable-limiting section 310 confirms the value of the inputted steering angle command gradual-change gain Gfa4 (Step S410). The steering angle command value variable-limiting section 310 sets the limit values to the limit values "in the manual steering" shown in FIG.8 (Step S420) when the gradual-change gain Gfa4 is "0%", sets the limit values to the limit values "in the automatic steering" shown in FIG.8 (Step S430) when the gradual-change gain Gfa4 is "100%", and sets the limit values to intermediate values (Step S440) when the gradual-change gain Gfa4 is between "0%" and "100%". The steering angle command value variable-limiting section 310 limits the steering angle command value θref inputted from the vehicle-side ECU 100 by using the set limit values (Step S450), and outputs the steering angle command value θref1.

The steering angle command value θref1 is inputted into the variable-rate limiting section 320 with the steering angle command gradual-change gain Gfa4 and the actual steering angle θr. The variable-rate limiting section 320 confirms the value of the steering angle command gradual-change gain Gfa4 (Step S460). When the gradual-change gain Gfa4 is "0%", the variable-rate limiting section 320 sets the limit value to zero (Step S470), and sets the value of the stored previous steering angle command value θref1 to the value of the actual steering angle θr (Step S471). The Step S471 is a step for suppressing a sudden change of the steering angle command value by starting in a state of matching the steering angle command value θref1 with the actual steering angle θr because a value at the time of terminating the previous steering control remains at the time of starting the steering control where the gradual-change gain Gfa4 becomes larger than "0%" and the handle may suddenly move by the sudden change if using its value as it is. The variable-rate limiting section 320 sets the limit value to the predetermined value (Step S480) when the gradual-change gain Gfa4 is "100%", and sets the limit value to the intermediate value (Step S490) when the gradual-change gain Gfa4 is between 0% and 100%. The variable-rate limiting section 320 calculates the difference (the change amount) between the steering angle command value θref1 and the previous steering angle command value θref1 (Step S500). When the absolute value of the change amount is larger than the limit value (Step S510), the variable-rate limiting section 320 increases or decreases the steering angle command value θref1 so that the absolute value of the change amount becomes the limit value (Step S520), and outputs the result as the steering angle command value θref2 (Step S530). When the absolute value of the change amount is smaller than or equal to the limit value (Step S510), the variable-rate limiting section 320 outputs the steering angle command value θref1 as the steering angle command value θref2 (Step S530).

The steering angle command value θref2 is multiplied with the steering angle command gradual-change gain Gfa4 at the multiplying section 391 (Step S540), and the multiplied result is outputted as the steering angle command value 8ref3. The steering angle command value θref3 is inputted into the handle vibration eliminating section 330. The handle vibration eliminating section 330 reduces the vibration frequency component to the steering angle command value θref3 (Step S550), and inputs the reduced result as the target steering angle to the position control section 340.

The target steering angle θt is inputted into the reference model section 341 and the filter section 343. Using the above Expression 1, the reference model section 341 converts the target steering angle θt into the target steering angle θt1 (Step S560). The target steering angle θt1 is addition-inputted into the subtracting section 344, the actual steering angle θr has been subtraction-inputted into the subtracting section 344, and the angle deviation θe between the target steering angle θt1 and the actual steering angle θr is obtained at the subtracting section 344 (Step S570). The angle deviation θe is inputted into the proportional gain section 342, and the proportional gain section 342 multiplies the angle deviation θe with the proportional gain Kpp and calculates the steering angular velocity command value ωref1a (Step S580). The vehicle speed V is also inputted into the filter section 343 into which the target steering angle θt is inputted. The filter section 343 obtains the FF filter gain Kff from the vehicle speed V using the characteristic shown in FIG.10, and converts the target steering angle θt into the steering angular velocity command value ωref1b (Step S590). The steering angular velocity command values ωref1a and ωref1b are added at the adding section 345 (Step S600), and the steering angular velocity command value ωref1 which is the added result is outputted. The steering angular velocity command value ωref1 is inputted into the adding section 393.

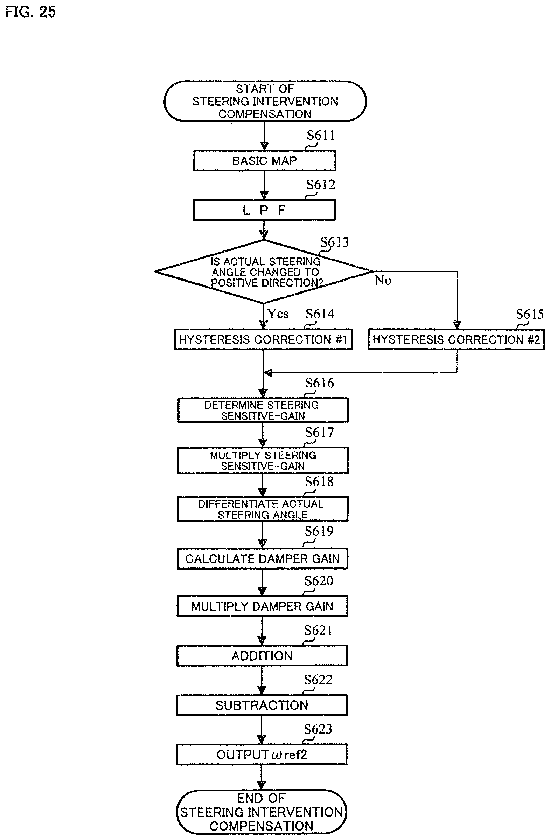

On the other hand, the steering intervention compensating section 350 inputs the vehicle speed V, the steering torque Tt and the actual steering angle θr, and calculates the steering angular velocity command value ωref2 (Step S610). The operation example of the steering intervention compensating section 350 will be described with reference to FIG.25.

The vehicle speed V inputted into the steering intervention compensating section 350 is inputted into the basic map section 351 and the damper gain section 354, the steering torque Tt is inputted into the basic map section 351 and the actual steering angle θr is inputted into the basic map section 351, the LPF 356, the steering angular velocity calculating section 353 and the steering angle sensitive-gain section 355.

Using the basic map shown in FIG.12, the basic map section 351 obtains the steering angular velocity command value ωref2a based on the steering torque Tt and the vehicle speed V (Step S611). The steering angular velocity command value ωref2a is addition-inputted into the subtracting section 358B. The LPF 356 performs a low pass filter process to the actual steering angle θr, calculates the actual steering angle θr' (Step S612), and inputs the actual steering angle θr' to the hysteresis correcting section 352.

The hysteresis correcting section 352 judges the direction to which the actual steering angle θr' changes, from the difference Δθr between the actual steering angle θr' and the previous actual steering angle θrp (Step S613). When the actual steering angle θr' changes to a positive direction, the steering angular velocity command value ωref2b is calculated from the above Expressions 3 and 5 (Step S614). When the actual steering angle θr' changes to a negative direction, the steering angular velocity command value ωref2b is calculated from the above Expressions 4 and 6 (Step S615). The steering angular velocity command value ωref2b is inputted into the multiplying section 357B. Here, the hysteresis width $A_{hys}$, the values "a, x1 and y1" are preset and are held. Alternatively, the value "b" may be preliminarily calculated in each direction from the Expressions 5 and 6, and may be held instead of the values x1 and y1. Moreover, the vehicle speed V is also inputted into the hysteresis correcting section 352, and the hysteresis correcting section 352 may set the hysteresis width $A_{hys}$, using the characteristic shown in FIG.14.

Using the characteristic shown in FIG.16, the steering angle sensitive-gain section 355 determines the steering angle sensitive-gain Ga based on the actual steering angle θr (Step S616). The steering angle sensitive-gain Ga is inputted into the multiplying section 357B and is multiplied with the steering angular velocity command value ωref2b (Step S617). The multiplied result is inputted as the steering angular velocity command value ωref2c into the addition section 358A.

The steering angular velocity calculating section 353 differentiates the actual steering angle θr at the differential section 353A (Step S618), performs the low pass filter process to the differentiated result at the LPF 353B and outputs the processed result as the steering angular velocity ωs to the multiplying section 357A.

Using the damper gain map shown in FIG.15, the damper gain section 354 obtains the damper gain Gd based on the vehicle speed V (Step S619). The damper gain Gd is inputted into the multiplying section 357A and is multiplied with the steering angular velocity ωs (Step S620). The multiplied result is inputted as the steering angular velocity command value ωref2d into the adding section 358A. The steering angular velocity command values ωref2c and ωref2d are added at the adding section 358A (Step S621) and the added result is subtraction-inputted into the subtracting section 358B. The subtracting section 358B in the steering intervention compensating section 350 subtracts the added result from the steering angular velocity command value ωref2a (Step S622) and outputs the steering angular velocity command value ωref2 (Step S623).

The steering angular velocity command value ωref2 outputted from the steering intervention compensating section 350 is inputted into the adding section 393. The steering angular velocity command values ωref1 and ωref2 which are inputted into the adding section 393 are added (Step S630). The added result is outputted as the steering angular velocity command value ωref. The steering angular velocity command value ωref is multiplied with the velocity command gradual-change gain Gfa3 at the multiplying section 392 (Step S640), and the multiplied result is inputted as the steering angular velocity command value ωrefg into the velocity command value variable-limiting section 360.

The velocity command value variable-limiting section 360 inputs the velocity command gradual-change gain Gfa3 with the steering angular velocity command values ωrefg, and confirms the value of the velocity command gradual-change gain Gfa3 (Step S650). The velocity command value variable-limiting section 360 sets the limit values to the limit values shown by "Gfa3 SMALL" in FIG.17 (Step S660) when the gradual-change gain Gfa3 is smaller than the predetermined threshold, and sets the limit values to the limit values shown by "Gfa3 LARGE" in FIG.17 (Step S670) when the gradual-change gain Gfa3 is larger than or equal to the predetermined threshold. The velocity command value variable-limiting section 360 limits the steering angular velocity command values ωrefg by using the set limit values (Step S680), and outputs the target steering angular velocity ωt. The target steering angular velocity ωt is inputted into the steering angular velocity control section 370.

The steering angular velocity control section 370 inputs the actual steering angular velocity ωr and the velocity control gradual-change gain Gfa2 with the target steering angular velocity wt. The target steering angular velocity ωt is addition-inputted into the subtracting section 374, the actual steering angular velocity ωr is subtraction-inputted into the subtracting section 374, and the velocity deviation ωe between the target steering angular velocity ωt and the actual steering angular velocity ωr is inputted into the gain multiplying section 371 (Step S690). The gain multiplying section 371 multiplies the velocity deviation ωe with the gain Kvi (Step S700), and outputs the operation amount D1. The operation amount D1 is inputted into the integrating section 373. The integrating section 373 calculates the control amount Ir1 by integrating the operation amount D1 (Step S710), and inputs the control amount Ir1 to the multiplying section 376. The multiplying section 376 multiplies the control amount Ir1 with the velocity control gradual-change gain Gfa2 (Step S720), and outputs the control amount Ir3. The control amount Ir3 is addition-inputted into the subtracting section 375. The actual steering angular velocity ωr is inputted also into the gain multiplying section 372. The gain multiplying section 372 multiplies the actual steering angular velocity ωr with the gain Kvp (Step S730), and outputs the control amount Ir2. The control amount Ir2 is subtraction-inputted into the subtracting section 375. At the subtracting section 375, the deviation between the control amounts Ir3 and Ir2 is calculated (Step S740), and is inputted as the steering angle control current command value IrefW into the adding section 394.

The steering torque Tt is inputted also into the handle damping section 380. In the handle damping section 380, the gain section 381 multiplies the inputted steering torque Tt with the gain Kv (Step S750), and outputs the control amount Irv. The control amount Irv is phase-compensated at the damping phase compensating section 382 (Step S760), and the phase-compensated result is outputted as the steering angle control current command value IrefV. The steering angle control current command value IrefV is outputted to the adding section 394. The steering angle control current command values IrefW and IrefV inputted into the adding section 394 are added (Step S770), and the added result is inputted as the steering angle control current command value IrefP2 into the steering angle control current command-value limiting section 390.

The steering angle control current command-value limiting section 390 limits the steering angle control current command value IrefP2 by using the limit values of the characteristic shown in FIG.20, and outputs the steering angle control current command value IrefP1 (Step S780).

As well, the order of the operation of the steering angle control section 300 and the operation of the assist control section 230 may be reversed, or the operations may be performed in parallel. In the operation of the steering angle control section 300, the order of the operation to the calculation of the steering angular velocity command value ωref1 and the operation to the calculation of the steering angular velocity command value wref2, which are inputted into the adding section 393, the order of the operation to the calculation of the steering angle control current command value IrefW and the operation to the calculation of the steering angle control current command value IrefV, which are inputted into the adding section 394, and so on, may be reversed respectively, or both operations may be performed in parallel respectively. In the operation of the steering intervention compensating section 350, the order of sequential operations which are started from inputting the steering torque Tt and the actual steering angle θr, that is, the order of the operation of the basic map section 351, the operations of the LPF 356, the hysteresis correcting section 352, the steering angle sensitive-gain section 355 and the multiplying section 357B, and the operation of the damper gain section 354 and the multiplying section 357A may be reversed respectively, or the operations may be performed in parallel respectively.

Effects of the present embodiment will be described based on the results of simulations.

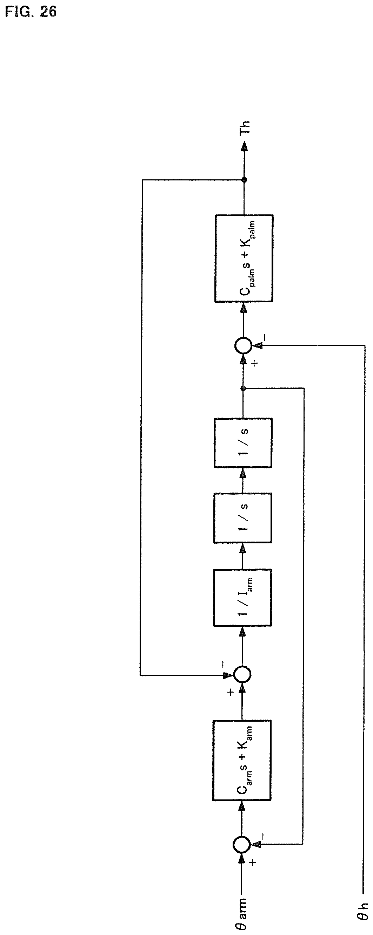

In the simulations, the vehicle motion model and the steering model of the driver are set as the plant model of the plant 400. It is possible to use a model shown in, for example, "Motion and control of an automobile", Masato Abe, Tokyo Denki University, Tokyo Denki University Press, published on September 20, 2009, the second impression of the first edition, chapter 3 (p.49 - 105), chapter 4 (p.107 - 130) and chapter 5 (p.131 - 147), as the vehicle motion model, and use the model shown in, for example, "A study with respect to an estimation of steering feeling of a vehicle considering a musculoskeletal characteristic of an arm", Daisuke Yokoi, master's thesis, Master's Programs, Mechanical Engineering, Graduate School of Engineering, Mie University, received on February 6, 2007, chapter 2 (p.3 - 5) and chapter 3 (p.6 - 9) (Reference Document) as the steering model. It is possible to use another model without limited to these. The steering model used in the present simulation is shown in FIG. 26 as a reference. In FIG. 26, "$C_{arm}$" and "$C_{palm}$" are viscosity coefficients, "$K_{arm}$" and "$K_{palm}$" are spring constants, and "$I_{arm}$" is an inertia moment of an arm. The handle angle θh is inputted from a mechanical model (a mechanical transfer characteristic) to the steering model (a steering transfer characteristic of a driver), and the handle manual input torque Th is outputted from the steering model to the mechanical model. Hereinafter, a target angle described in the above reference documents is referred to a driver's target angle (a steering target angle) θarm. Further, the model shown in the reference documents adds a mass system of the arm to a column inertia moment, however, by defining a force applied from a palm to the handle as the handle manual input torque Th, no hindrance occurs even if performing a simulation assuming that the spring constant $K_{palm}$ and the viscosity coefficient $C_{palm}$ which operate between an angle of the palm and the handle angle θh are large enough, and the present simulation is performed in this way. It is also assumed that followability of the motor current to the current command value is fast enough, an influence by operation of the current control and driving section 250 is slight, and the current command value is equal to the motor current. Furthermore, the vehicle speed is assumed constant.

First, an effect of the steering intervention compensation will be described.

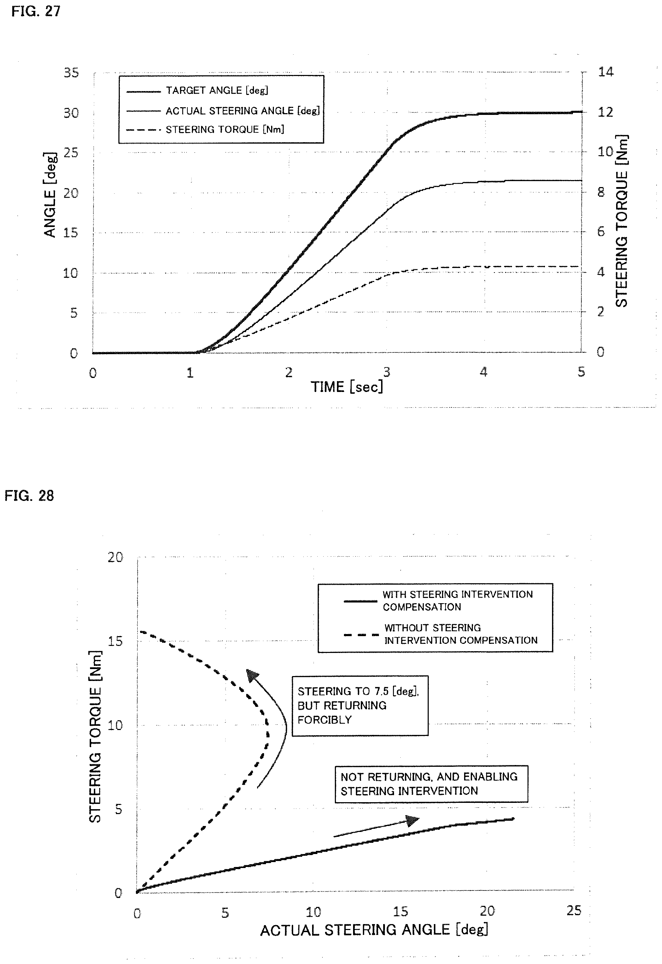

Assuming the steering angle command value θref to be constant at 0 [deg], a simulation of the automatic steering where the driver's target angle θarm is inputted, is performed. As a reference, time responses of the actual steering angle θr and the steering torque Tt to a time change of the driver's target angle θarm in a simulation considering the steering model of the driver under the same conditions, are shown in FIG.27. In FIG.27, the vertical axis indicates an angle [deg] and a steering torque [Nm], the horizontal axis indicates a time [sec], the thick solid line shows the driver's target angle θarm, the thin solid line shows the actual steering angle (the handle steering angle in the present embodiment) θr, and the broken line shows the steering torque Tt. As well, in FIG.27, the assist control-output gradual-change gain Gft1 is "0%", that is, the assist control does not operate. In the steering intervention compensating section 350, only the basic map section 351 functions, and the hysteresis correcting section 352, the damper gain section 354 and the steering angle sensitive-gain section 355 do not use. The above setting is adopted for showing that the steering intervention can be performed even in a state that only the steering angle control is performed. Further, FIG.27 shows an example of a simulation for describing a situation where the actual steering angle θr and the steering torque Tt are changed as the driver's target angle θarm is changed.

With respect to the changes of the actual steering angle θr and the steering torque Tt in the case of inputting the driver's target angle θarm like this, the case of performing the velocity control by the PI-control without the steering intervention compensation and the case of performing the steering intervention compensation are compared. In the former case, the assist control-output gradual-change gain Gft1 and the assist map gradual-change gain Gft2 are set to "100%" for the comparison with the present embodiment, and the difference between the integral methods is verified. In the latter case, the assist control-output gradual-change gain Gft1 is set to "0%". Further, in a conventional prior art (for example, Patent Document 1), the assist control command value is 0 [deg] in the steering control before the switching, however, since the steering intervention in this case is presumed to be more difficult than in the former case, this case is omitted.

A result of the simulation is shown in FIG.28. The vertical axis indicates the steering torque [Nm], the horizontal axis indicates the actual steering angle [deg], the broken line shows the case without the steering intervention compensation, and the solid line shows the case with the steering intervention compensation. In the basic map section 351 of the steering intervention compensating section 350, the basic map is set so as to linearly change from an origin.

As shown by the broken line in FIG.28, in the case without the steering intervention compensation, the steering can be performed until the actual steering angle θr becomes 7.5 [deg], however, since the velocity deviation (the deviation between the steering angular velocity command value and the actual steering angular velocity) is continuously stored by the influence of the integral of the PI-control in the velocity control, the steering forcibly returns to the position corresponding to the steering angle command value θref (= 0 [deg]) eventually. Moreover, a very large steering torque being larger than or equal to 15 [Nm] occurs, and the steering by the driver becomes difficult.

On the contrary, as shown by the solid line in FIG.28, in the case with the steering intervention compensation, the steering can be performed until the actual steering angle θr becomes about 22 [deg], and does not return to the position corresponding to the steering angle command value θref (= 0 [deg]). This is because the steering angular velocity command value ωref2 outputted from the steering intervention compensating section 350 is added to the steering angular velocity command value ωref1 outputted from the position control section 340, and the velocity deviation between the steering angular velocity command value ωref and the actual steering angular velocity ωr in the steering state balances in the vicinity of "0". Thus, the function of the steering intervention compensating section 350 enables the steering intervention by the driver. Further, an increase in the steering intervention compensation gain Ktp enables easier steering.

Further, the effect of the steering intervention compensation will be described based on the respective simulation results in the cases of changing the hysteresis characteristic and releasing the handle after the steering intervention. In the simulations, the basic map section 351 always functions. As the hysteresis correcting section 352 functions, the steering angle sensitive-gain section 355 also functions.

At first, the change of the hysteresis characteristic depending on with or without the hysteresis correcting section 352 and the damper gain section 354 will be described.

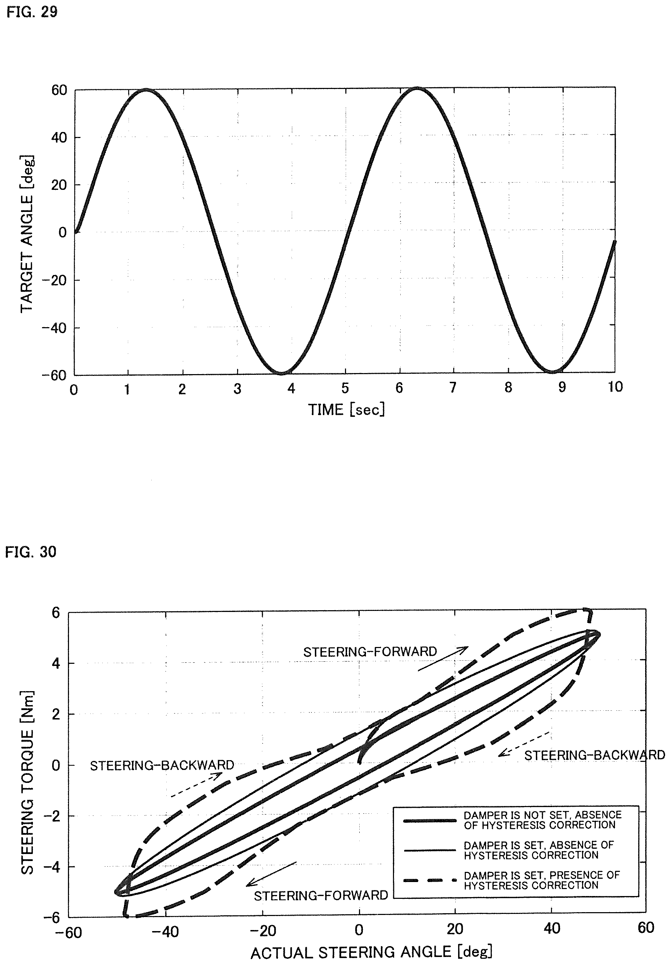

In the case that the driver's target angle θarm is changed in sinusoidal as shown in FIG.29 and is inputted, the change behaviors of the actual steering angle (the handle steering angle) θr and the steering torque Tt are shown in FIG.30. In FIG.30, the vertical axis indicates the steering torque [Nm], the horizontal axis indicates the actual steering angle [deg], the thick solid line shows the behavior in the case that both the damper gain section 354 and the hysteresis correcting section 352 do not function, the thin solid line shows the behavior in the case that the damper gain section 354 functions and the hysteresis correcting section 352 does not function, and the broken line shows the behavior in the case that both the damper gain section 354 and the hysteresis correcting section 352 function.

As well, in FIG.30, the case that the damper gain section 354 functions is expressed by "damper is set", the case that the damper gain section 354 does not function is expressed by "damper is not set", the case that the hysteresis correcting section 352 functions is expressed by "presence of the hysteresis correction", and the case that the hysteresis correcting section 352 does not function is expressed by "absence of the hysteresis correction". The above expressions are used in the following.

To reduce the uncomfortable feeling in the steering intervention, obtaining the desired hysteresis characteristic is required. The simulation results in FIG.30 are seen from the above point of view. At first, comparing with the thin solid line and the broken line, in the case of the "presence of the hysteresis correction", generating the adequate hysteresis width can be confirmed when the driver steers-backward (at the point that the actual steering angle is about ±50 [deg]). Comparing with the thick solid line and the thin solid line, in the case that the damper is set, generating the adequate hysteresis width can be confirmed when the handle is positioned near the center (at the point that the actual steering angle is about 0 [deg]). By functioning the basic map section 351, correcting the hysteresis, and setting the damper, the desired hysteresis characteristic can be obtained in any steering pattern.

Next, the simulation result in the case of releasing the handle after the steering intervention will be described.

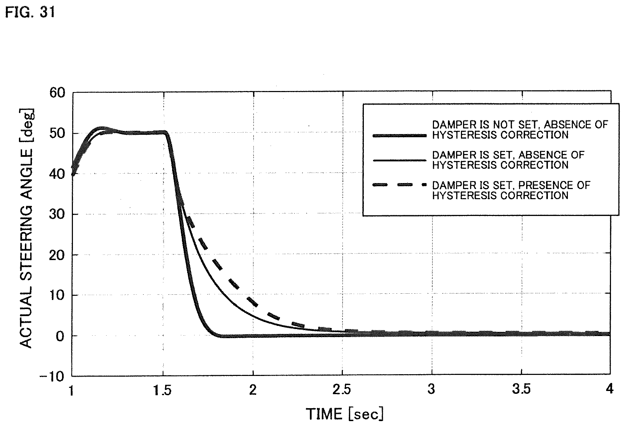

In the case that the actual steering angle θr is up to about 50 [deg] by the steering intervention and then the state is transitioned to the handle releasing state (the handle manual input torque Th is 0 [Nm]), the change behavior of the actual steering angle θr is shown in FIG.31. In FIG.31, the vertical axis indicates the actual steering angle [deg], and the horizontal axis indicates the time [sec]. After "1.5" seconds when starting the simulation, the state is transitioned to the handle releasing state. As well as the case of FIG.30, the thick solid line shows the behavior in the case that "the damper is not set" and "absence of the hysteresis correction", the thin solid line shows the behavior in the case that "the damper is set" and "absence of the hysteresis correction", and the broken line shows the behavior in the case that "the damper is set" and "presence of the hysteresis correction".

As understood from FIG.31, in the case that "the damper is not set" and "absence of the hysteresis correction", the actual steering angle is steeply varied toward "the steering angle command value = 0 [deg]" after the state is transitioned to the handle releasing state (refer to the thick solid line). In the case that "the damper is set" and "absence of the hysteresis correction", the steep variation is suppressed (refer to the thin solid line). Further, in the case that "the damper is set" and "presence of the hysteresis correction", the steep variation is strongly suppressed (refer to the broken line). Thereby, even if the state is transitioned to the handle releasing state after the steering intervention, the steep variation of the handle can be suppressed.

As the last of the description of the effect, an effect for a problem that the integral value of the I-control accumulates excessively due to an increase in the steering angular velocity at the start of the steering angle control and the steering angle control command value may become excessive (the problem in Patent Document 3 and so on), will be described.

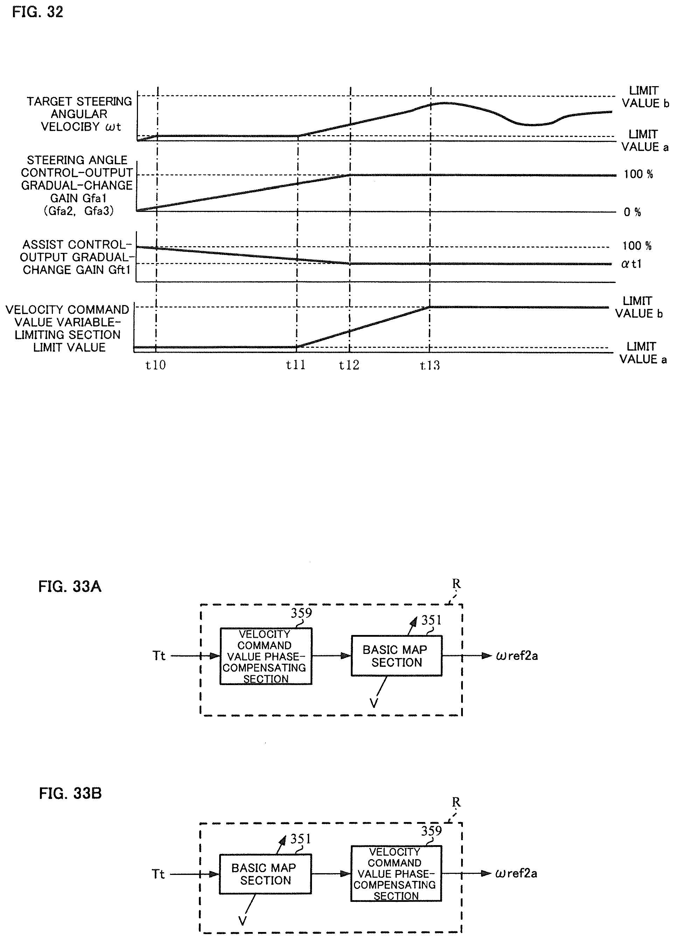

FIG.32 shows the time passing of the target steering angular velocity ωt, the gradual-change gains and the limit value used at the velocity command value variable-limiting section 360 when the state changes from the manual steering state to the automatic steering state. As well, assuming that the velocity control gradual-change gain Gfa2 and the velocity command gradual-change gain Gfa3 are changed in synchronization with the steering angle control-output gradual-change gain Gfa1, only the gradual-change gain Gfa1 is shown in FIG.32. Assuming that the assist control-output gradual-change gain Gft1 and the assist map gradual-change gain Gft2 are also changed in synchronization with the gradual-change gain Gfa1, only the situation of the change of the gradual-change gain Gft1 is shown as a reference. Further, the magnitude of the limit value used at the velocity command value variable-limiting section 360 is set so as to be fixed at a small value when the gradual-change gain Gfa3 is smaller than the predetermined threshold, and gradually increase when the gradual-change gain Gfa3 is larger than or equal to the predetermined threshold.

The steering angular velocity command value ωref is multiplied with the velocity command gradual-change gain Gfa3, is limited at the velocity command value variable-limiting section 360, and becomes the target steering angular velocity ωt. When the transference from the manual steering state to the automatic steering state is started, the gradual-change gain Gfa3 gradually increases from "0", and the target steering angular velocity ωt also gradually increases from "0". After that, when the steering angular velocity command value ωrefg inputted into the velocity command value variable-limiting section 360 reaches the limit value (the limit value "a") at a time point t10, the target steering angular velocity ωt becomes constant at the limit value "a", however, the gradual-change gain Gfa3 continuously increases. When the gradual-change gain Gfa3 becomes the predetermined threshold at a time point t11, the limit value gradually increases, and the target steering angular velocity ωt also increases correspondingly. When the gradual-change gain Gfa3 becomes "100%" at a time point t12, in addition, the limit value becomes the limit value "b" at a time point t13, the target steering angular velocity ωt changes within the limit value "b". Since the target steering angular velocity ωt is limited by the limit value "a" and is limited by multiplication of the velocity control gradual-change gain Gfa2 at the steering angular velocity control section 370 between the time points t10 and t13, the excessive accumulation of the integral value in the steering angular velocity control section 370 is suppressed, and the current command value causing the uncomfortable feeling to the driver as an output of the steering angle control can be reduced. After the transition of the limit value is ended (that is, after the time point t13), the steering angular velocity command value ωref is not limited by the gradual-change gain Gfa3 and the velocity command value variable-limiting section 360, and a signal in the steering angular velocity control section 370 is not also limited by the gradual-change gain Gfa2, so that it is possible to shift to the normal steering angle control.

As well, with respect to the multiplications of the respective gradual-change gains (Gfa1 to Gfa4, Gft1 and Gft2) in the first embodiment, in such a case of focusing on a cost more than the effect by the multiplication of the gradual-change gain, it is possible to leave at least one multiplication and omit other multiplications. Further, the respective limiting sections (the steering angle command value variable-limiting section, the variable-rate limiting section, the velocity command value variable-limiting section and the steering angle control current command value limiting section) are also possible to omit in the same case or the like. When the steering angle command value variable-limiting section 310, the variable-rate limiting section 320 and the multiplying section 391, in addition, the handle vibration eliminating section 330 are omitted, the steering angle command value θref is inputted as the target steering angle θt into the position control section 340. When the multiplying section 392 and the velocity command value variable-limiting section 360 are omitted, the steering angular velocity command value ωref is inputted as the target steering angular velocity ωt into the steering angular velocity control section 370.

In the steering intervention compensating section 350, in such a case of focusing on the cost and the process time more than the addition of the viscous feeling, it is possible to omit the damper gain section 354 and/or the steering angle sensitive-gain section 355. In the case that the damper gain section 354 is omitted, the steering angular velocity calculating section 353, the multiplying section 357A and the adding section 355 can also be omitted. The steering angular velocity command value ωref2c outputted from the multiplying section 357B is subtraction-inputted into the subtracting section 358B. In the case that the steering angle sensitive-gain section 355 is omitted, the multiplying section 357B can also be omitted. The steering angular velocity command value ωref2b outputted from the hysteresis correcting section 352 is inputted into the adding section 358A. The LPF 356 and/or the LPF 353B can also be omitted. The velocity command value phase-compensating section 359 which performs the phase compensation may be disposed at the previous stage or at the subsequent stage of the basic map section 351. The configuration in the region R surrounded by the broken line in FIG.11 may be replaced with the configuration shown in FIG.11A or FIG.11B. The velocity command value phase-compensating section 359 sets phase lead compensation as the phase compensation, and performs the phase lead compensation, for example, by a primary filter where a cutoff frequency of a numerator is 1.0 [Hz] and a cutoff frequency of a denominator is 1.3 [Hz]. Thereby, the comfortable feeling can be realized.

Other embodiments of the present invention will be described.

In the first embodiment, the multiplication of the velocity control gradual-change gain Gfa2 in the steering angular velocity control section 370 is performed for the control amount Ir1 which is the output from the integrating section 373. Alternatively, the above multiplication can also be performed for the steering angle control current command value IrefW which is the output from the subtracting section 375.

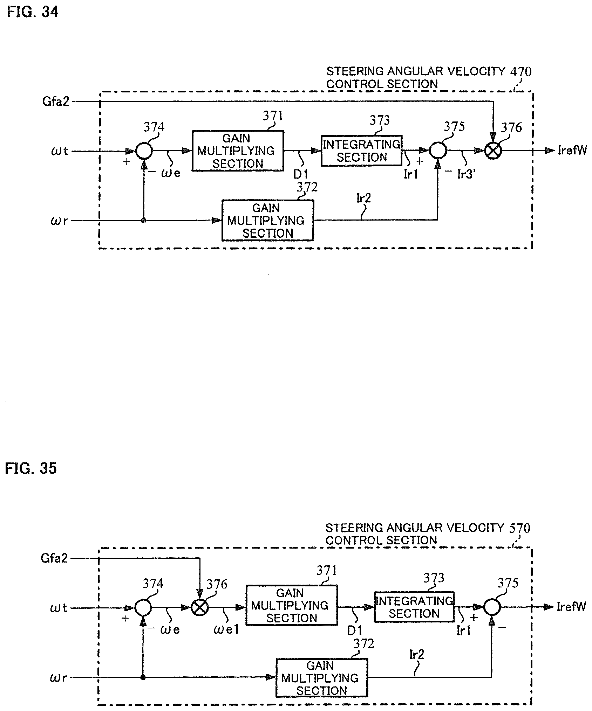

FIG.34 shows a configuration example (the second embodiment) of the steering angular velocity control section in the case that the steering angle control current command value IrefW is multiplied with the velocity control gradual-change gain Gfa2. Comparing with the steering angular velocity control section 370 in the first embodiment shown in FIG.18, the multiplying section 376 is disposed not at the subsequent stage of the integrating section 373 but at the subsequent stage of the subtracting section 375. Other configurations are the same as those of the first embodiment.

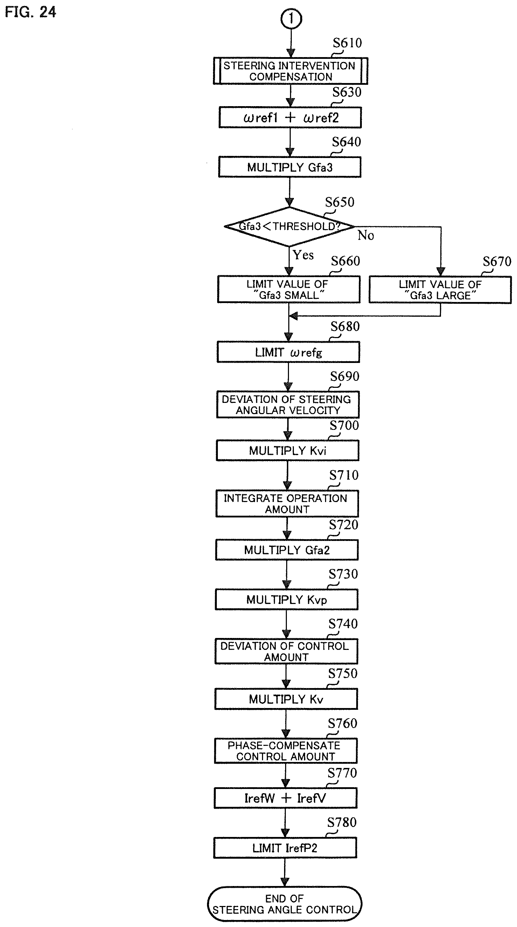

In the operation example of the second embodiment, the operations up to the Step S710 that the integrating section 373 integrates the operation amount D1 and calculates the control amount Ir1 are the same as those of the first embodiment shown in FIGs.23 and 24. After that, the control amount Ir1 is inputted into the subtracting section 375, and the control amount Ir3' which is the deviation (= Ir1 - Ir2) between the control amounts Ir1 and Ir2 is calculated at the subtracting section 375. The multiplying section 376 multiplies the control amount Ir3' with the velocity control gradual-change gain Gfa2 and outputs the multiplied result as the steering angle control current command value IrefW to the adding section 394. The subsequent operations (the operations after the Step S750) are the same as those of the first embodiment.

Furthermore, the multiplication of the velocity control gradual-change gain Gfa2 can also be performed at other sections in the steering angular velocity control section 370.

In a configuration example (the third embodiment) of the steering angular velocity control section shown in FIG.35, the deviation ωe which is the output from the subtracting section 374 is multiplied with the velocity control gradual-change gain Gfa2. Comparing with the steering angular velocity control section 370 in the first embodiment shown in FIG.18, in the steering angular velocity control section 570 of the third embodiment, the multiplying section 376 is disposed not at the subsequent stage of the integrating section 373 but at the subsequent stage of the subtracting section 374. Other configurations are the same as those of the first embodiment.

In the operation example of the third embodiment, the operations up to the Step 690 that the subtracting section 374 calculates the velocity deviation ωe between the target steering angular velocity ωt and the actual steering angular velocity ωr are the same as those of the first embodiment shown in FIGs.23 and 24. The velocity deviation ωe is inputted not into the gain multiplying section 371 but into the multiplying section 376. The multiplying section 376 multiplies the velocity deviation ωe with the velocity control gradual-change gain Gfa2 and inputs the multiplied result as the velocity deviation ωe1 to the gain multiplying section 371. The subsequent operations are the same as those of the first embodiment except for omitting the operation of the Step S720.

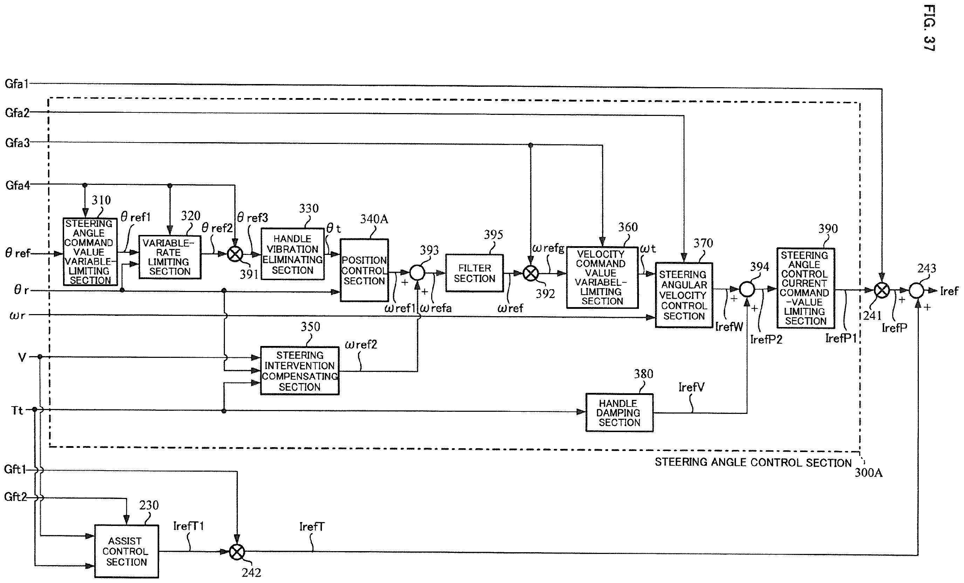

Another configuration example (the fourth embodiment) of the steering angle control section and the switching section is shown in FIG.37 corresponding to FIG.7. The steering angle control section 300A of the fourth embodiment comprises the position control section 340A which inputs the target steering angle θt and the actual steering angle θr, and the filter section 395 disposed between the adding section 393 and the multiplying section 392. Other configurations of the fourth embodiment are the same as those shown in FIG.7. The position control section 340A performs a proportional (P) control, and calculates the steering angular velocity command value (the basic steering angular velocity command value) ωref1 for approximating the actual steering angle θr to the target steering angle θt based on the angle deviation between the target steering angle θt and the actual steering angle θr.

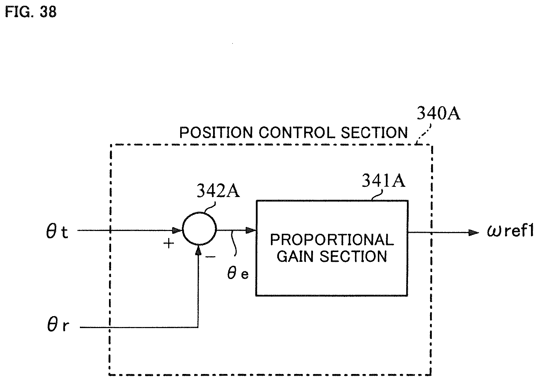

The configuration example of the position control section 340A is shown in FIG.38. The position control section 340A comprises the proportional gain section 341A and the subtracting section 342A. The angle deviation θe (= θt - θr) between the target steering angle 6t and the actual steering angle θr is calculated at the subtracting section 342A, and then is inputted into the proportional gain section 341A. The proportional gain section 341A multiplies the angle deviation θe with the proportional gain Kpp and then calculates the steering angular velocity command value ωref1.

The filter section 355 has the FF filter, and converts the steering angular velocity command value ωrefa into the steering angular velocity command value (the extended steering angular velocity command value) ωref by using the FF filter. As the FF filter, for example, the filter which performs the phase lead compensation and where the cutoff frequency of the numerator is 3 [Hz] and the cutoff frequency of the denominator is 5 [Hz], can be used. Generally, since the steering frequency by the driver and the frequency of the vehicle motion by steering of the driver are considered up to substantially 10 [Hz], in the case that the above setting example is used, the phase of the steering angular velocity command value ωref in the above vehicle motion frequency band can be lead and the gain characteristic in the high frequency side can be enhanced. In the above explanation, the example of the primary phase lead filter is shown. The filter configuration is not limited to the above one. If the phase lead characteristic and the gain characteristic can be adjusted, the filter configuration that is combined with the high-order phase lead compensation and the plural phase compensators can be adapted as the FF filter. By using such an FF filter, it is possible to extend a band where the actual steering angular velocity ωr is controlled with respect to the steering angular velocity command value ωrefa to the high frequency side, and to improve the responsibility of the velocity control operating as an inner loop of the steering angle control. If the responsibility of the velocity control is improved, the gains of the position control (the steering angle control) and the steering intervention compensation which are outside the velocity control are possible to largely adjust without overshooting, so that the responsibility in the steering angle control and the responsibility in the steering intervention are possible to improve as a result.

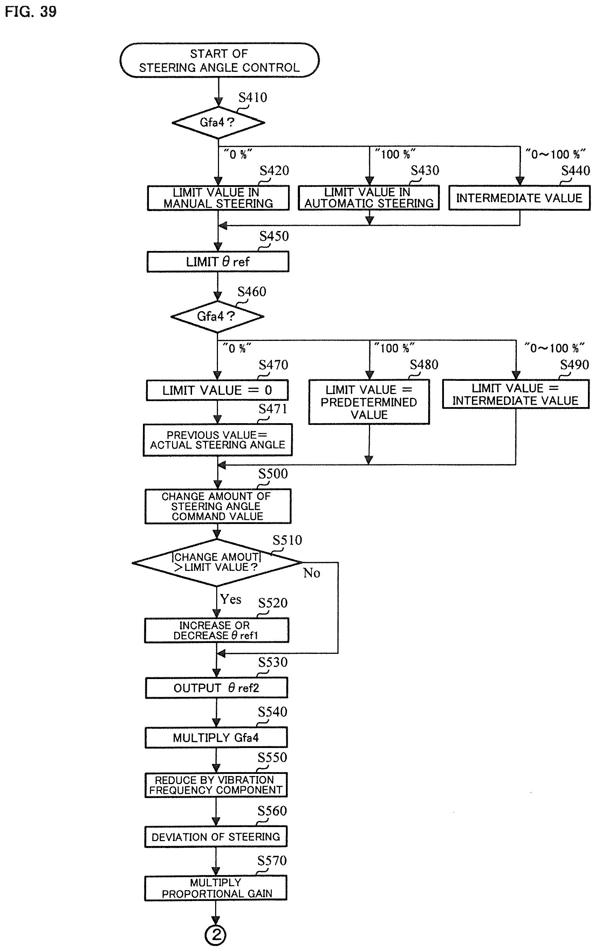

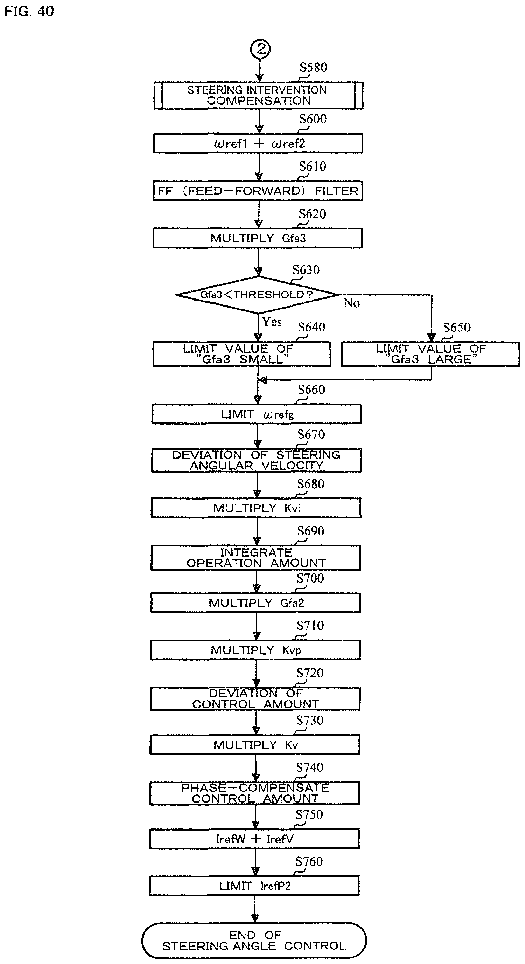

The detail of the operating example of the steering angle control section 300A will be described with reference to flowcharts shown in FIGs.39 and 40.

The steering angle command value variable-limiting section 310 confirms the value of the inputted steering angle command gradual-change gain Gfa4 (Step S410), sets the limit values to the limit values "in the manual steering" when the gradual-change gain Gfa4 is "0%" (Step S420), sets the limit values to the limit values "in the automatic steering" when the gradual-change gain Gfa4 is "100%" (Step S430), and sets the limit values to intermediate values when the gradual-change gain Gfa4 is between 0% and 100% (Step S440). The steering angle command value variable-limiting section 310 limits the steering angle command value θref inputted from the vehicle-side ECU 100 by using the set limit values (Step S450), and outputs the steering angle command value θref1.

The steering angle command value θref1 is inputted into the variable-rate limiting section 320 with the steering angle command gradual-change gain Gfa4 and the actual steering angle θr. The variable-rate limiting section 320 confirms the value of the steering angle command gradual-change gain Gfa4 (Step S460). When the gradual-change gain Gfa4 is "0%", the variable-rate limiting section 320 sets the limit value to zero (Step S470), and sets the value of the stored previous steering angle command value θref1 to the value of the actual steering angle θr (Step S471). The value when terminating the previous steering angle control remains at the time when the steering angle control that the gradual-change gain Gfa4 becomes larger than "0%" is started at the Step S471. The Step S471 is a step for suppressing a sudden change of the steering angle command value by starting in a state of matching the steering angle command value θref1 with the actual steering angle θr. The variable-rate limiting section 320 sets the limit value to the predetermined value (Step S480) when the gradual-change gain Gfa4 is "100%", and sets the limit value to the intermediate value (Step S490) when the gradual-change gain Gfa4 is between 0% and 100%. The variable-rate limiting section 320 calculates the difference (the change amount) between the steering angle command value θref1 and the previous steering angle command value θref1 (Step S500). When the absolute value of the change amount is larger than the limit value (Step S510), the variable-rate limiting section 320 increases or decreases the steering angle command value θref1 (Step S520), and outputs the result as the steering angle command value θref2 (Step S530). When the absolute value of the change amount is smaller than or equal to the limit value (Step S510), the variable-rate limiting section 320 outputs the steering angle command value θref1 as the steering angle command value θref2 (Step S530).

The steering angle command value θref2 is multiplied with the steering angle command gradual-change gain Gfa4 at the multiplying section 391 (Step S540), and the steering angle command value θref3 is inputted into the handle vibration eliminating section 330. The handle vibration eliminating section 330 reduces the vibration frequency component in the steering angle command value θref3 (Step S550), and outputs the reduced result as the target steering angle θt to the position control section 340A.

The target steering angle θt is addition-inputted into the subtracting section 342A in the position control section 340A. The angle deviation θe between the target steering angle θt and the actual steering angle θr is obtained at the subtracting section 342A (Step S560). The angle deviation θe is inputted into the proportional gain section 341A. The proportional gain section 341A multiplies the angle deviation θe with the proportional gain Kpp, and calculates the steering angular velocity command value ωref1 (Step S570).

The steering intervention compensating section 350 calculates the steering angular velocity command value θref2 as described above (refer to FIG.25) (Step S580). The basic map section 351 in the steering intervention compensating section 350 obtains the steering angular velocity command value ωref2a based on the steering torque Tt and the vehicle speed V (Step S611). The LPF 356 calculates the actual steering angle θr' (Step S612) and inputs the actual steering angle θr' to the hysteresis correcting section 352. The hysteresis correcting section 352 judges the changing direction of the actual steering angle θr' from the difference Δθr between the actual steering angle θr' and the previous actual steering angle θrp as well as described above (Step S613). In the case that the actual steering angle θr' changes to the positive direction, the steering angular velocity command value ωref2b is calculated by the above Expressions 1 and 3 (Step S614). In the case that the actual steering angle θr' changes to the negative direction, the steering angular velocity command value ωref2b is calculated by the above Expressions 2 and 4 (Step S615).

The steering angle sensitive-gain section 355 determines the steering angle sensitive-gain Ga based on the actual steering angle θr (Step S616). The steering angular velocity command value ωref2b is multiplied with the steering angle sensitive-gain Ga (Step S617), and the multiplied result is inputted as the steering angular velocity command value ωref2c into the adding section 358A. The steering angular velocity calculating section 353 differentiates the actual steering angle θr at the differential section 353A (Step S618), performs the low pass filter process to the differential result at the LPF 353B, and inputs the processed result as the steering angular velocity ωs to the multiplying section 357A.

The damper gain section 354 obtains the damper gain Gd based on the vehicle speed V (Step S619). The damper gain Gd is inputted into the multiplying section 357A and is multiplied with the steering angular velocity ωs (Step S620). The multiplied result is inputted as the steering angular velocity command value ωref2d into the adding section 358A. The steering angular velocity command values ωref2c and ωref2d are added at the adding section 358A (Step S621), the added result is subtraction-inputted into the subtracting section 358B and is subtracted from the steering angular velocity command value ωref2a (Step S622), and the subtracted result is outputted as the steering angular velocity command value ωref2 (Step S623).

The steering angular velocity command values ωref1 and ωref2 which are inputted into the adding section 393 are added (Step S600), and the added result is outputted as the steering angular velocity command value ωrefa to the filter section 395. The filter section 395 converts the steering angular velocity command value ωrefa into the the steering angular velocity command value ωref by using the FF filter (Step S610). The steering angular velocity command value ωref is multiplied with the velocity command gradual-change gain Gfa3 at the multiplying section 392 (Step S620), and the multiplied result is inputted as the steering angular velocity command value ωrefg into the velocity command value variable-limiting section 360.

After performing the above steps, the operations after the Step S630 of the first embodiment in FIG.24 will be performed.

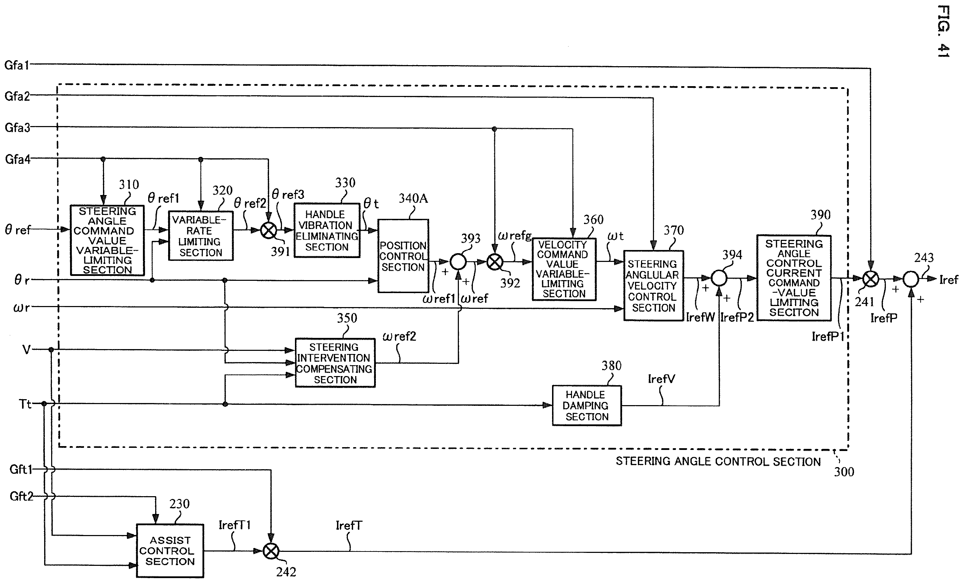

In the steering angle control section 300A of the fourth embodiment, the configuration shown in FIG.41 that the filter section 395 is removed may be used (the fifth embodiment). Comparing the operations of the above configuration with those of the fourth embodiment, only the FF filter process of the Step S610 in FIG.40 is removed, and all of other operations are the same as those of the fourth embodiment. Accordingly, the explanation of the fifth embodiment is omitted.

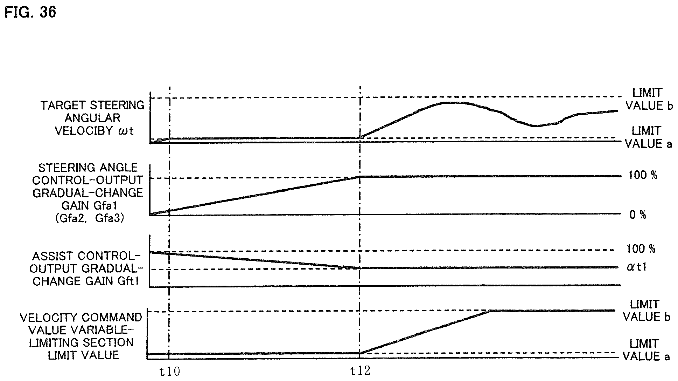

In the above embodiments (the first to the fifth embodiments), the velocity command value variable-limiting section 360 sets the limit values depending on the velocity command gradual-change gain Gfa3, and switches the limit values when the gradual-change gain Gfa3 becomes the predetermined threshold. However, the velocity command value variable-limiting section uses the steering angle control-output gradual-change gain Gfa1 instead of the gradual-change gain Gfa3, and may switch the limit values when the gradual-change gain Gfa1 becomes "100%". In a configuration (the sixth embodiment) of this case, the gradual-change gain Gfa1 is inputted into the velocity command value variable-limiting section instead of the gradual-change gain Gfa3, and the other configurations are the same as the other embodiments. In an operation of the sixth embodiment, a judgment operation of determining the limit values at the velocity command value variable-limiting section (the Step S650 shown in FIG.24 or the Step S630 in FIG.40) is changed to a confirmation of whether or not the gradual-change gain Gfa1 is smaller than "100%". In the sixth embodiment, the time passing of the target steering angular velocity ωt, the gradual-change gains and the limit value of the velocity command value variable-limiting section in the case of changing the state from the manual steering state to the automatic steering state, become as shown in FIG.36. Compared with the time passing shown in FIG.32, the limit value of the velocity command value variable-limiting section gradually increases from the time point t12 where the gradual-change gain Gfa1 becomes "100%", and the target steering angular velocity ωt also increases correspondingly.

The above diagrams are a concept diagram for qualitatively explaining the present invention, but the present invention is not limited to the above diagrams. The above embodiments are one of the preferable embodiments of the present invention, but the present invention is not limited to the embodiments described herein. It will be apparent that various changes and modifications can be made without departing from the scope of the present invention.

Explanation of Reference Numerals

1 handle (steering wheel)
2 column shaft (steering shaft, handle shaft)
10 torque sensor
12 vehicle speed sensor
20 motor
21 rotational angle sensor
30 control unit (ECU)
31 current command value calculating section
35 PI-control section
36 PWM-control section
37 inverter
38 motor current detector
100 vehicle-side ECU

110 vehicle-state quantity detecting section
120 switch command section
130 target track calculating section
140 vehicle motion control section
141 steering angle command value generating section
200 EPS-side ECU
210 EPS-state quantity detecting section
220 switch judging and gradual-change gain generating section
221 switch judging section
222 gradual-change gain generating section
223 manual input judging section
224 steering state judging section
225 smoothing filter section
226 absolute value processing section
227 judgment processing section
230 assist control section
240 switching section
250 current control and driving section
300, 300A, 300B steering angle control section
310 steering angle command value variable-limiting section
320 variable-rate limiting section
330 handle vibration eliminating section
340, 340A position control section
341 reference model section
342 proportional gain section
343 filter section
350 steering intervention compensating section
351 basic map section
352 hysteresis correcting section
353 steering angular velocity calculating section
354 damper gain section
355 steering angle sensitive-gain section
359 velocity command value phase-compensating section
360 velocity command value variable-limiting section
370, 470, 570 steering angular velocity control section
371, 372 gain multiplying section
373 integrating section
380 handle damping section
381 gain section
382 damping phase compensating section
390 steering angle control current command-value limiting section
395 filter section
400 plant

**Claims**

1. An electric power steering apparatus that drives a motor based on a current command value and performs an assist control and a steering angle control to a steering system by driving and controlling said motor, comprising:

a steering angle control section that calculates a steering angle control current command value for said steering angle control based on at least a steering angle command value and an actual steering angle,
wherein said steering angle control section comprises:

a position control section that calculates a basic steering angular velocity command value based on said steering angle command value and said actual steering angle;
a steering intervention compensating section that obtains a compensatory steering angular velocity command value for steering intervention compensation depending on a steering torque, said actual steering angle and a vehicle speed; and
a steering angular velocity control section that calculates said steering angle control current command value based on a steering angular velocity command value calculated from said basic steering angular velocity command value and said compensatory steering angular velocity command value, and an actual steering angular velocity, and

wherein said steering intervention compensating section comprises:

a basic map section that obtains a first velocity command value from said steering torque using a basic map which is vehicle speed-sensitive; and
a hysteresis correcting section that obtains a second velocity command value from said actual steering angle using a desired hysteresis characteristic,

wherein said steering intervention compensating section calculates said compensatory steering angular velocity command value from said first velocity command value and said second velocity command value, and calculates said current command value using at least said steering angle control current command value.

2. The electric power steering apparatus according to Claim 1,
wherein a hysteresis width of said hysteresis characteristic changes depending on said vehicle speed.

3. The electric power steering apparatus according to Claim 1 or 2,
wherein said basic map has a characteristic that said first velocity command value increases as said steering torque increases.

4. The electric power steering apparatus according to any one of Claims 1 to 3,
wherein said basic map has a characteristic that said first velocity command value decreases as said vehicle speed increases.

5. The electric power steering apparatus according to any one of Claims 1 to 4,
wherein said steering intervention compensating section further comprises a velocity command value phase-compensating section that is disposed at a previous stage or a subsequent stage of said basic map section and performs a phase compensation, and
wherein said steering intervention compensating section obtains said first velocity command value from said steering torque through said basic map section and said velocity command value phase-compensating section.

6. The electric power steering apparatus according to any one of Claims 1 to 5,
wherein said steering angular velocity control section calculates said steering angle control current command value by an integral-proportional control (an I-P control) by using said steering angular velocity command value and said actual steering angular velocity.

7. The electric power steering apparatus according to any one of Claims 1 to 6,
wherein said position control section comprises a proportional gain section that calculates said basic steering angular velocity command value by multiplying a deviation between said steering angle command value and said actual steering angle with a proportional gain.

8. The electric power steering apparatus according to any one of Claims 1 to 6,
wherein said position control section comprises:

a reference model section that transforms said steering angle command value into a target steering angle using a reference model;
a proportional gain section that calculates a first basic steering angular velocity command value by multiplying a deviation between said target steering angle and said actual steering angle with a proportional gain; and
a filter section that transforms said steering angle command value into a second basic steering angular velocity command value using a feed-forward filter (an FF filter), and
wherein said position control section calculates said basic steering angular velocity command value by adding said second basic steering angular velocity command value to said first basic steering angular velocity command value.

9.  The electric power steering apparatus according to any one of Claims 1 to 8,
    wherein said electric power steering apparatus further comprises an assist control section that calculates an assist control current command value for said assist control based on at least said steering torque, and
    said electric power steering apparatus calculates said current command value using said assist control current command value and said steering angle control current command value.

10. The electric power steering apparatus according to Claim 9,
    wherein said assist control current command value is multiplied with an assist control-output gradual-change gain for adjusting said assist control current command value.

11. The electric power steering apparatus according to Claim 9 or 10,
    wherein an assist map output current obtained in said assist control section is multiplied with an assist map gradual-change gain.

12. The electric power steering apparatus according to Claim 10,
    wherein only said steering angle control is performed to said steering system by multiplying said assist control current command value with said assist control-output gradual-change gain whose value is zero.

13. The electric power steering apparatus according to any one of Claims 1 to 12,
    wherein said steering angle control section further comprises a steering angle control current command-value limiting section that limits said steering angle control current command value by using a preset limit value.

14. The electric power steering apparatus according to Claim 1,
    wherein said steering angle control section further comprises a filter section that converts a steering angular velocity command value calculated from said basic steering angular velocity command value and said compensatory steering angular velocity command value into an extended steering angular velocity command value using a feed-forward filter, and
    wherein said steering angular velocity control section calculates said steering angle control current command value based on said extended steering angular velocity command value and an actual steering angular velocity.

15. The electric power steering apparatus according to Claim 14,
    wherein a hysteresis width of said hysteresis characteristic changes depending on said vehicle speed.

16. The electric power steering apparatus according to Claim 14 or 15,
    wherein said basic map has a characteristic that said first velocity command value increases as said steering torque increases.

17. The electric power steering apparatus according to any one of Claims 14 to 16,
    wherein said basic map has a characteristic that said first velocity command value decreases as said vehicle speed increases.

18. The electric power steering apparatus according to any one of Claims 14 to 17,
    wherein said steering intervention compensating section further comprises a velocity command value phase-compensating section that is disposed at a previous stage or a subsequent stage of said basic map section and performs a phase compensation, and
    wherein said steering intervention compensating section obtains said first velocity command value from said steering torque through said basic map section and said velocity command value phase-compensating section.

19. The electric power steering apparatus according to any one of Claims 14 to 18,
    wherein said filter section is set to have a phase lead characteristic in a vehicle motion frequency band.

20. The electric power steering apparatus according to Claim 19,
    wherein said vehicle motion frequency band is a band up to 10 [Hz].

21. The electric power steering apparatus according to any one of Claims 14 to 20,
    wherein said steering angular velocity control section calculates said steering angle control current command value by an integral proportional control (an I-P control) by using said extended steering angular velocity command value and said actual steering angular velocity.

22. The electric power steering apparatus according to any one of Claims 14 to 21,
    wherein said position control section comprises a proportional gain section that calculates said basic steering angular velocity command value by multiplying a deviation between said steering angle command value and said actual steering angle with a proportional gain.

23. The electric power steering apparatus according to any one of Claims 14 to 22, wherein said electric power steering apparatus further comprises an assist control section that calculates an assist control current command value for said assist control based on at least said steering torque, and said electric power steering apparatus calculates said current command value using said assist control current command value and said steering angle control current command value.

24. The electric power steering apparatus according to Claim 23, wherein said assist control current command value is multiplied with an assist control-output gradual-change gain for adjusting said assist control current command value.

25. The electric power steering apparatus according to Claim 23 or 24, wherein an assist map output current obtained in said assist control section is multiplied with an assist map gradual-change gain.

26. The electric power steering apparatus according to Claim 24, wherein only said steering angle control is performed to said steering system by multiplying said assist control current command value with said assist control-output gradual-change gain whose value is zero.

27. The electric power steering apparatus according to any one of Claims 14 to 26, wherein said steering angle control section further comprises a steering angle control current command value limiting section that limits said steering angle control current command value by using a preset limit value.

FIG. 1

PRIOR ART

FIG. 2

PRIOR ART

FIG. 3

FIG. 4

SWITCH JUDGING AND GRADUAL-
CHANGE GAIN GENERATING SECTION 220

SWITCH JUDGING SECTION 221

223

Tt → MANUAL INPUT JUDGING SECTION → Jh → 224 STEERING STATE JUDGING SECTION → Js → 222 GRADUAL-CHANGE GAIN GENERATING SECTION → Gfa1 ~ Gfa4 Gft1, Gft2

SW →

FIG. 5

MANUAL INPUT JUDGING SECTION 223

225

Tt → SMOOTHING FILTER SECTION → Tt' → 226 ABSOLUTE VALUE PROCESSING SECTION → |Tt'| → 227 JUDGMENT PROCESSING SECTION → Jh

FIG. 6A

AUTOMATIC STEERING STATE | SWITCHING STATE | MANUAL STEERING STATE

100%

STEERING ANGEL CONTROL-OUTPUT
GRADUAL-CHANGE GAIN Gfa1
VELOCITY CONTROL
GRADUAL-CHANGE GAIN Gfa2
VELOCITY COMMAND
GRADUAL-CHANGE GAIN Gfa3
STEERING ANGLE COMMAND
GRADUAL-CHANGE GAIN Gfa4    0%

t1        t2        TIME

FIG. 6B

100%

ASSIST CONTROL-OUTPUT
GRADUAL-CHANGE GAIN Gft1    $\alpha$ t1

0%

TIME

FIG. 6C

100%

ASSIST MAP GRADUAL-
CHANGE GAIN Gft2    $\alpha$ t2

0%

TIME

FIG. 7

FIG. 8

FIG. 9

FIG. 10

FIG. 11

FIG. 12A

FIG. 12B

FIG. 13

STEERING ANGULAR VELOCITY
COMMAND VALUE [rad/s]

$A_{hys}$

L3

L1

L2

ACTUAL
STEERING
ANGLE[deg]

1

0.5

-0.5

-1

-50

-25

0

25

50

FIG. 14

FIG. 15

FIG. 16

FIG. 17

FIG. 18

STEERING ANGULAR VELOCITY
CONTROL SECTION 370

Gfa2

374

ωt

+
− ωe

371
GAIN
MULTIPLYING
SECTION

D1

373
INTEGRATING
SECTION

Ir1

376

Ir3

375

+
−

IrefW

372
GAIN
MULTIPLYING
SECTION

ωr

Ir2

FIG. 19

HANDLE DAMPING SECTION 380

Tt

381
GAIN
SECTION

Irv

382
DAMPING PHASE
COMPENSATING
SECTION

IrefV

FIG. 20

IrefP1

0

IrefP2

FIG. 21

```
                    ┌─────────────┐
                    │    START    │
                    └──────┬──────┘
                           │           S10
            ┌──────────────▼──────────────────┐
            │ DETECT ACTUAL STEERING ANGLE,    │
            │ STEERING TORQUE AND VEHICLE SPEED │
            └──────────────┬──────────────────┘
                           │           S20
            ┌──────────────▼──────────────────┐
            │        CALCULATE ACTUAL          │
            │    STEERING ANGULAR VELOCITY     │
            └──────────────┬──────────────────┘
                           │           S30
            ┌──────────────▼──────────────────┐
            │ GENERATE SWITCH JUDGMENT AND     │
            │     GRADUAL-CHANGE GAINS         │
            └──────────────┬──────────────────┘
                           │           S40
            ┌──────────────▼──────────────────┐
            │     STEERING ANGLE CONTROL       │
            └──────────────┬──────────────────┘
                           │           S50
            ┌──────────────▼──────────────────┐
            │       CALCULATE ASSIST MAP       │
            │        OUTPUT CURRENT            │
            └──────────────┬──────────────────┘
                           │           S60
            ┌──────────────▼──────────────────┐
            │       MULTIPLY ASSIST MAP        │
            │      GRADUAL-CHANGE GAIN         │
            └──────────────┬──────────────────┘
                           │           S70
            ┌──────────────▼──────────────────┐
            │     CALCULATE ASSIST CONTROL     │
            │    CURRENT COMMAND VALUE         │
            └──────────────┬──────────────────┘
                           │           S80
            ┌──────────────▼──────────────────┐
            │ MULTIPLY STEERING ANGLE CONTROL- │
            │   OUTPUT GRADUAL-CHANGE GAIN     │
            └──────────────┬──────────────────┘
                           │           S90
            ┌──────────────▼──────────────────┐
            │  MULTIPLY ASSIST CONTROL-OUTPUT  │
            │      GRADUAL-CHANGE GAIN         │
            └──────────────┬──────────────────┘
                           │           S100
            ┌──────────────▼──────────────────┐
            │        IrefP  +  IrefT           │
            └──────────────┬──────────────────┘
                           │           S110
            ┌──────────────▼──────────────────┐
            │      CONTROL MOTOR CURRENT       │
            └──────────────┬──────────────────┘
                           │
                    ┌──────▼──────┐
                    │     END     │
                    └─────────────┘
```

FIG. 22

START OF GENERATING
SWITCH JUDGMENT AND
GRADUAL-CHANGE GAINS

S210
SMOOTH STEERING TORQUE

S220
ABSOLUTE VALUE OF
STEERING TORQUE

S230
ABSOLUTE VALUE
≧ THRESHOLD ? — No

Yes — S240
"PRESENCE OF
MANUAL INPUT"

S250
"ABSENCE OF
MANUAL INPUT "

S260
INPUT
SWITCH
SIGNAL ? — No

Yes

S270
"ASSIST
CONTROL MODE" OR
"PRESENCE OF
MANUAL INPUT"? — No

Yes — S280
"MANUAL STEERING"

S290
"AUTOMATIC STEERING"

S300
MANUAL STEERING? — No

Yes — S310
CHANGE TO VALUES
IN MANUAL STEERING

S320
CHANGE TO VALUES
IN AUTOMATIC STEERING

END OF GENERATING
SWITCH JUDGMENT AND
GRADUAL-CHANGE GAINS

FIG. 23

START OF
STEERING ANGLE CONTROL

S410
Gfa4 ?

"0 %" → S420 LIMIT VALUE IN MANUAL STEERING

"100 %" → S430 LIMIT VALUE IN AUTOMATIC STEERING

"0~100 %" → S440 INTERMEDIATE VALUE

S450
LIMIT $\theta$ ref

S460
Gfa4 ?

"0 %" → S470 LIMIT VALUE = 0

"100 %" → S480 LIMIT VALUE = PREDETERMINED VALUE

"0~100 %" → S490 LIMIT VALUE = INTERMEDIATE VALUE

S471
PREVIOUS VALUE = ACTUAL STEERING ANGLE

S500
CHANGE AMOUT OF STEERING ANGLE COMMAND VALUE

S510
|CHANGE AMOUNT| > LIMIT VALUE ?

No

Yes → S520
INCREASE OR DECREASE $\theta$ ref1

S530
OUTPUT $\theta$ ref2

S540
MULTIPLY Gfa4

S550
REDUCE BY VIBRATION FREQUENCY COMPONENT

S560
REFERENCE MODEL

S570
DEVIATION OF STEERING ANGLE

S580
MULTIPLY PROPORTIONAL GAIN

S590
FF(FEED-FORWARD) FILTER

S600
$\omega$ref1a + $\omega$ref1b

①

**FIG. 24**

① → S610 STEERING INTERVENTION COMPENSATION

S630 ωref1 + ωref2

S640 MULTIPLY Gfa3

S650 Gfa3 < THRESHOLD?

No → S670 LIMIT VALUE OF "Gfa3 LARGE"

Yes → S660 LIMIT VALUE OF "Gfa3 SMALL"

S680 LIMIT ωrefg

S690 DEVIATION OF STEERING ANGULAR VELOCITY

S700 MULTIPLY Kvi

S710 INTEGRATE OPERATION AMOUNT

S720 MULTIPLY Gfa2

S730 MULTIPLY Kvp

S740 DEVIATION OF CONTROL AMOUNT

S750 MULTIPLY Kv

S760 PHASE-COMPENSATE CONTROL AMOUNT

S770 IrefW + IrefV

S780 LIMIT IrefP2

END OF STEERING ANGLE CONTROL

FIG. 25

```
        ┌─────────────────────────┐
        │       START OF          │
        │  STEERING INTERVENTION  │
        │     COMPENSATION        │
        └─────────────────────────┘
                     │
                     ▼         S611
        ┌─────────────────────────┐
        │       BASIC MAP         │
        └─────────────────────────┘
                     │
                     ▼         S612
        ┌─────────────────────────┐
        │        L  P  F          │
        └─────────────────────────┘
                     │
                     ▼              S613
              ╱────────────╲
            ╱ IS ACTUAL STEERING ╲
           ╱  ANGLE CHANGED TO    ╲────────── No ──────────┐
           ╲  POSITIVE DIRECTION? ╱                        │
             ╲────────────╱                                │
                 │ Yes   S614                              │ S615
                 ▼                                         ▼
    ┌──────────────────────────┐          ┌──────────────────────────┐
    │  HYSTERESIS CORRECTION #1 │          │  HYSTERESIS CORRECTION #2 │
    └──────────────────────────┘          └──────────────────────────┘
                 │                                         │
                 ▼◄────────────────────────────────────────┘
                          S616
        ┌─────────────────────────┐
        │   DETERMINE STEERING    │
        │     SENSITIVE-GAIN      │
        └─────────────────────────┘
                     │   S617
                     ▼
        ┌─────────────────────────┐
        │   MULTIPLY STEERING     │
        │     SENSITIVE-GAIN      │
        └─────────────────────────┘
                     │   S618
                     ▼
        ┌─────────────────────────┐
        │   DIFFERENTIATE ACTUAL  │
        │      STEERING ANGLE     │
        └─────────────────────────┘
                     │   S619
                     ▼
        ┌─────────────────────────┐
        │  CALCULATE DAMPER GAIN  │
        └─────────────────────────┘
                     │   S620
                     ▼
        ┌─────────────────────────┐
        │   MULTIPLY DAMPER GAIN  │
        └─────────────────────────┘
                     │   S621
                     ▼
        ┌─────────────────────────┐
        │        ADDITION         │
        └─────────────────────────┘
                     │   S622
                     ▼
        ┌─────────────────────────┐
        │       SUBTRACTION       │
        └─────────────────────────┘
                     │   S623
                     ▼
        ┌─────────────────────────┐
        │      OUTPUT ωref2       │
        └─────────────────────────┘
                     │
                     ▼
        ┌─────────────────────────┐
        │       END OF            │
        │  STEERING INTERVENTION  │
        │     COMPENSATION        │
        └─────────────────────────┘
```

FIG. 26

FIG. 27

FIG. 28

FIG. 29

FIG. 30

FIG. 31

FIG. 32

FIG. 33A

FIG. 33B

FIG. 34

FIG. 35

FIG. 36

TARGET STEERING
ANGULAR
VELOCIBY ωt
LIMIT VALUE b
LIMIT VALUE a

STEERING ANGLE
CONTROL-OUTPUT
GRADUAL-CHANGE
GAIN Gfa1
(Gfa2, Gfa3)
100 %
0 %

ASSIST CONTROL-
OUTPUT GRADUAL-
CHANGE GAIN Gft1
100 %
αt1

VELOCITY COMMAND
VALUE VARIABLE-
LIMITING SECTION
LIMIT VALUE
LIMIT VALUE b
LIMIT VALUE a

t10          t12

FIG. 37

FIG. 38

POSITION CONTROL SECTION $\underset{\nearrow}{\overset{340A}{\phantom{.}}}$

$\theta t \longrightarrow$ + $\overset{342A}{\bigcirc}$ $\underset{\theta e}{\longrightarrow}$ PROPORTIONAL GAIN SECTION $\overset{341A}{\phantom{.}}$ $\longrightarrow \omega ref1$

$\theta r \longrightarrow$ −

FIG. 39

```
        ┌─────────────────────────┐
        │       START OF          │
        │ STEERING ANGLE CONTROL  │
        └─────────────────────────┘
                    │
                    ▼   S410
                ╱Gfa4 ?╲
              ╱          ╲
         "0 %"    "100 %"    "0~100 %"
            │        │          │
            ▼ S420   ▼ S430     ▼ S440
    ┌──────────┐ ┌──────────┐ ┌──────────────┐
    │LIMIT VALUE│ │LIMIT VALUE│ │ INTERMEDIATE │
    │    IN     │ │    IN     │ │    VALUE     │
    │  MANUAL   │ │ AUTOMATIC │ └──────────────┘
    │ STEERING  │ │ STEERING  │
    └──────────┘ └──────────┘
            │        │          │
            ▼◄───────┴──────────┘
            │   S450
    ┌──────────────┐
    │  LIMIT θ ref │
    └──────────────┘
            │
            ▼   S460
        ╱Gfa4 ?╲
      ╱          ╲
   "0 %"    "100 %"    "0~100 %"
      │        │          │
      ▼ S470   ▼ S480     ▼ S490
┌──────────┐ ┌──────────┐ ┌──────────────┐
│LIMIT     │ │LIMIT     │ │LIMIT VALUE = │
│VALUE = 0 │ │VALUE =   │ │INTERMEDIATE  │
└──────────┘ │PREDETER- │ │VALUE         │
      │ S471 │MINED VALUE│ └──────────────┘
      ▼      └──────────┘
┌──────────────┐   │          │
│PREVIOUS VALUE=│  │          │
│ACTUAL STEERING│  │          │
│    ANGLE      │  │          │
└──────────────┘   │          │
      │◄───────────┴──────────┘
      │   S500
┌──────────────┐
│CHANGE AMOUNT  │
│OF STEERING    │
│ANGLE COMMAND  │
│VALUE          │
└──────────────┘
      │
      ▼   S510
  ╱|CHANGE AMOUT|╲      No
 ╱ >LIMIT VALUE? ╲─────────┐
  ╲              ╱         │
      │ Yes  S520          │
      ▼                    │
┌──────────────┐           │
│INCREASE OR    │          │
│DECREASE θ ref1│          │
└──────────────┘           │
      │◄──────────────────┘
      │   S530
┌──────────────┐
│OUTPUT  θ ref2│
└──────────────┘
      │   S540
┌──────────────┐
│MULTIPLY Gfa4 │
└──────────────┘
      │   S550
┌──────────────┐
│REDUCE BY      │
│VIBRATION      │
│FREQUENCY      │
│COMPONENT      │
└──────────────┘
      │   S560
┌──────────────┐
│DEVIATION OF   │
│STEERING       │
└──────────────┘
      │   S570
┌──────────────┐
│MULTIPLY       │
│PROPORTIONAL   │
│GAIN           │
└──────────────┘
      │
      ▼
     (2)
```

FIG. 40

② S580

STEERING INTERVENTION
COMPENSATION

S600

$\omega$ref1 + $\omega$ref2

S610

FF (FEED−FORWARD) FILTER

S620

MULTIPLY Gfa3

S630

Gfa3<THRESHOLD? — No

Yes — S640

LIMIT VALUE OF
"Gfa3 SMALL"

S650

LIMIT VALUE OF
"Gfa3 LARGE"

S660

LIMIT $\omega$refg

S670

DEVIATION OF STEERING
ANGULAR VELOCITY

S680

MULTIPLY Kvi

S690

INTEGRATE
OPERATION AMOUNT

S700

MULTIPLY Gfa2

S710

MULTIPLY Kvp

S720

DEVIATION OF
CONTROL AMOUNT

S730

MULTIPLY Kv

S740

PHASE−COMPENSATE
CONTROL AMOUNT

S750

IrefW + IrefV

S760

LIMIT IrefP2

END OF
STEERING ANGLE CONTROL

FIG. 41

# EP 3 501 945 A1

## INTERNATIONAL SEARCH REPORT

| | International application No. |
|---|---|
| | PCT/JP2018/028615 |

**A. CLASSIFICATION OF SUBJECT MATTER**
Int.Cl. B62D6/00(2006.01)i, B62D5/04(2006.01)i

According to International Patent Classification (IPC) or to both national classification and IPC

**B. FIELDS SEARCHED**

Minimum documentation searched (classification system followed by classification symbols)
Int.Cl. B62D6/00, B62D5/04, B60W10/00-50/28, G08G1/00-1/16

| Documentation searched other than minimum documentation to the extent that such documents are included in the fields searched | |
|---|---|
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2016/088705 A1 (NSK LTD.) 09 June 2016, entire text, all drawings & US 2017/0274928 A1, entire text, all drawings & EP 3210855 A1 & CN 107207043 A | 1-27 |
| A | WO 2017/068895 A1 (KYB CORPORATION) 27 April 2017, entire text, all drawings & JP 2017-77830 A & CN 108137093 A & KR 10-2018-0068980 A | 1-27 |
| A | JP 2015-214250 A (JTEKT CORP.) 03 December 2015, entire text, all drawings (Family: none) | 1-27 |
| A | JP 2015-020604 A (DENSO CORP.) 02 February 2015, entire text, all drawings (Family: none) | 1-27 |
| A | US 2011/0098890 A1 (GM GLOBAL TECHNOLOGY OPERATIONS. INC.) 28 April 2011, entire text, all drawings & DE 102010048913 A1 & CN 102039928 A | 1-27 |

☐ Further documents are listed in the continuation of Box C.    ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 16 October 2018 (16.10.2018) | 23 October 2018 (23.10.2018) |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004017881 A
- JP 3917008 B

- JP 3912279 B

**Non-patent literature cited in the description**

- **MASATO ABE.** Motion and control of an automobile. Tokyo Denki University Press, 20 September 2009, 49-105, 107-130, 131-147

- master's thesis, Master's Programs, Mechanical Engineering. **DAISUKE YOKOI.** Graduate School of Engineering. Mie University, 06 February 2007, 3-5, 6-9